# EUROPEAN PATENT APPLICATION

(11) **EP 4 531 468 A1**
(43) Date of publication of application: **02.04.2025**
(21) Application number: 23829948.1
(22) Date of filing: 13.06.2023
(51) Int. Cl.: H04W 52/02

(54) **COMMUNICATION METHOD AND APPARATUS**

(30) Priority: 27.06.2022 CN 202210743780; 25.07.2022 CN 202210879015
(71) Applicant: Huawei Technologies Co., Ltd., Shenzhen, Guangdong 518129 (CN)
(72) Inventor: DOU, Fenghui, Shenzhen, Guangdong 518129 (CN); XUE, Yifan, Shenzhen, Guangdong 518129 (CN)
(74) Representative: MERH-IP Matias Erny Reichl Hoffmann Patentanwälte PartG mbB
(86) International application number: PCT/CN2023/100029
(87) International publication number: WO 2024/001765

(57) **Abstract**

This application relates to the field of wireless communication technologies, and provides a communication method and an apparatus, to reduce duration of invalid monitoring of a physical downlink control channel PDCCH, and reduce power consumption of a terminal device. The method includes: A first core network device obtains first information. The first information includes first jitter information, the first jitter information indicates a first jitter range, the first jitter range is related to a first partial time period, the first partial time period is in duration of a first service, and the first service is related to a first terminal device. Then, the first core network device sends the first information to an access network device. The first information is associated with a setting of a discontinuous reception DRX parameter.

## Description

This application claims priorities to Chinese Patent Application No. 202210743780.3, filed with the China National Intellectual Property Administration on June 27, 2022 and entitled "POWER CONSUMPTION CONTROL METHOD, TERMINAL DEVICE, AND NETWORK DEVICE", and to Chinese Patent Application No. 202210879015.4, filed with the China National Intellectual Property Administration on July 25, 2022 and entitled "COMMUNICATION METHOD AND APPARATUS", both of which are incorporated herein by reference in their entireties.

### TECHNICAL FIELD

This application relates to the field of wireless communication, and in particular, to a communication method and an apparatus.

### BACKGROUND

In a communication system, a terminal device needs to monitor a physical downlink control channel (physical downlink control channel, PDCCH), to determine whether a network device has scheduling information. The network device may configure a discontinuous reception (discontinuous reception, DRX) mechanism for the terminal device, to reduce power consumption of the terminal device.

### SUMMARY

In an extended reality (extended reality, XR) service, a data frame usually has a periodicity. However, in a process of transmitting different data frames between an application server and an access network device, because different routing manners are selected and load changes, jitter (jitter) occurs on time at which the data frame arrives at the access network device. In other words, the original periodicity has specific jitter. When the periodicity of the data frame matches a periodicity of a DRX mechanism, if on duration (on duration) in a DRX cycle (DRX cycle) and an occasion for monitoring a PDCCH are not properly set, PDCCH monitoring performed by a terminal device before the terminal device detects the PDCCH is meaningless, and power consumption is wasted.

This application provides a communication method and an apparatus, to reduce duration of invalid monitoring of the PDCCH, and reduce the power consumption of the terminal device. To achieve the foregoing objective, the following technical solutions are used in this application.

According to a first aspect, a communication method is provided. An execution body of the method may be a first core network device, or may be a chip used in the first core network device. The following uses an example in which the execution body is the first core network device for description. The method includes: The first core network device obtains first information. The first information includes first jitter information, the first jitter information indicates a first jitter range, the first jitter range is related to a first partial time period, the first partial time period is in duration of a first service, and the first service is related to a first terminal device. Then, the first core network device sends the first information to an access network device. The first information is associated with a setting of a discontinuous reception DRX parameter.

In this way, the access network device may set the DRX parameter based on the first jitter information, for example, determine a time domain position at which the first terminal device starts to monitor a PDCCH. In other words, the first terminal device monitors the PDCCH in a part of on duration in a DRX cycle, and does not need to continuously monitor the PDCCH during the entire on duration, to reduce duration of invalid monitoring of the PDCCH, and reduce power consumption of the terminal device.

In a possible design, when the first core network device sends the first information to the access network device in the duration, the first information further includes second jitter information. The second jitter information indicates a second jitter range, and the second jitter range is a jitter range of the entire duration of the first service.

In other words, each time the first core network device provides the first jitter information for the access network device, the first core network device further provides the second jitter information.

In a possible design, when the first core network device sends the first information to the access network device for the first time in the duration, the first information further includes the second jitter information. The second jitter information indicates the second jitter range, and the second jitter range is the jitter range of the entire duration of the first service.

In other words, when providing the first jitter information for the access network device for the first time in the duration of the first service, the first core network device further provides the second jitter information.

In a possible design, before the first core network device sends the first information to an access network device, the method further includes: The first core network device sends second jitter information to the access network device. The second jitter information indicates a second jitter range, and the second jitter range is a jitter range of the entire duration of the first service.

In other words, the first jitter information and the second jitter information are separately sent. The first core network device first provides the first jitter information for the access network device, and then provides the second jitter information for the access network device.

In a possible design, the first jitter range is less than the second jitter range.

In a possible design, that a first core network device obtains first information includes: The first core network device receives the first information from an application server. In other words, the first core network device may obtain the first information from the application server.

In a possible design, that a first core network device obtains first information includes: The first core network device determines the first information based on first data and/or second data. The first data includes a deviation of a moment at which an application server generates service data of the first service, and the second data includes jitter that is of the service data of the first service and that is generated in the following process: a transmission process from the application server to a second core network device, and/or a transmission process from the second core network device to the access network device.

In a possible design, the first core network device alternatively determines the first information based on at least one of cell information and information about a quality of service QoS flow. The cell information indicates a cell in which the first terminal device is located. The QoS flow is for carrying service data that is of the first service and that is sent by a second core network device to the first terminal device, and the QoS flow is configured by the first core network device for the second core network device, the access network device, and the first terminal device. In other words, the first core network device can further determine a jitter range of a specific cell or a specific QoS flow.

In a possible design, that a first core network device obtains first information includes: The first core network device receives the first information from a third core network device. In other words, the first core network device may obtain the first information from another core network device.

In a possible design, the first information is determined by the third core network device based on at least one of first data and second data. The first data includes a deviation of a moment at which an application server generates service data of the first service, and the second data includes jitter that is of the service data of the first service and that is generated in the following process: a transmission process from the application server to a second core network device, and/or a transmission process from the second core network device to the access network device.

In a possible design, the first information is alternatively determined by the third core network device based on at least one of cell information and information about a QoS flow. The cell information indicates a cell in which the first terminal device is located. The QoS flow is for carrying service data that is of the first service and that is sent by a second core network device to the first terminal device, and the QoS flow is configured by the first core network device for the second core network device, the access network device, and the first terminal device.

In a possible design, before the first core network device receives the first information from a third core network device, the method further includes: The first core network device sends a subscription message to the third core network device. The subscription message includes an analytics identifier ID, and the analytics ID is for requesting to analyze jitter information of the first service, so that the third core network device provides the jitter information of the first service for the first core network device.

In a possible design, after the first core network device sends the first information to an access network device, the method further includes: The first core network device obtains third jitter information. The third jitter information indicates a third jitter range, the third jitter range is related to a second partial time period, and the second partial time period is in the duration of the first service. Then, the first core network device sends the third jitter information to the access network device. The third jitter information is associated with the setting of the DRX parameter.

Because the third jitter range can better represent a jitter feature of the second partial time period, the access network device updates the DRX parameter based on the third jitter information, for example, updates a time domain position at which the first terminal device starts to monitor the PDCCH in the second partial time period, to reduce the power consumption of the first terminal device.

In a possible design, that the first core network device obtains third jitter information includes: The first core network device determines the third jitter information based on data arrival information in a first moving time window. Alternatively, the first core network device determines the third jitter information based on data arrival information in a first moving time window and the first jitter information. The first moving time window is before the second partial time period. The data arrival information indicates a moment at which the service data of the first service arrives at the second core network device.

In other words, the first core network device performs statistical analysis on the data arrival information in the first moving time window, to determine whether to update a jitter range of a partial time period.

In a possible design, the first moving time window has a first length.

In a possible design, the first information further includes third jitter information. The third jitter information indicates a third jitter range, the third jitter range is related to a second partial time period, and the second partial time period is in the duration of the first service.

In other words, the first core network device provides jitter ranges of at least two partial time periods for the access network device at a time, so that the access network device uses different DRX parameters in different partial time periods. For example, time domain positions at which the first terminal device starts to monitor the PDCCH in different partial time periods are different, so that the power consumption on the first terminal device side is reduced.

In a possible design, that the first core network device sends the first information to an access network device includes: The first core network device sends control plane signaling to the access network device. The first core network device is a session management network element, and the control plane signaling includes the first information. In other words, the first core network device sends the first information to the access network device via a control plane.

In a possible design, the control plane signaling is an N2 session management message.

In a possible design, that the first core network device sends the first information to an access network device includes: The first core network device sends a user data packet to the access network device. The first core network device is a user plane network element, and the user data packet includes the first information. In other words, the first core network device sends the first information to the access network device via a user plane.

In a possible design, the user data packet includes a general packet radio service tunneling protocol user plane GTP-U header, and the GTP-U header includes the first information.

In a possible design, that the first core network device sends the first information to an access network device includes: The first core network device sends the first information to the access network device via a fourth core network device. In other words, the first core network device sends the first information to the access network device via another core network device.

In a possible design, the first core network device is a session management network element, and the fourth core network device is a user plane network element.

In a possible design, the first core network device is a user plane network element, and the fourth core network device is a session management network element.

According to a second aspect, a communication method is provided. An execution body of the method may be a third core network device, or may be a chip used in the third core network device. The following uses an example in which the execution body is the third core network device for description. The method includes: The third core network device receives a subscription message from a first core network device. The subscription message includes an analytics identifier ID, the analytics ID is for requesting to analyze a jitter range of a first service, and the first service is related to a first terminal device. The third core network device obtains at least one of the following information: first data and second data based on the subscription message. The first data includes a deviation of a moment at which an application server generates service data of the first service, and the second data includes jitter that is of the service data of the first service and that is generated in the following process: a transmission process from the application server to a second core network device, and/or a transmission process from the second core network device to an access network device. The third core network device determines a jitter range learning result of the first service based on the obtained information. The third core network device sends the jitter range learning result of the first service to the first core network device.

In other words, the third core network device can perform statistical analysis on the first data and/or the second data, to obtain the jitter range learning result of the first service. When the first core network device subscribes to jitter information of the first service, the third core network device may provide the first core network device with the jitter range learning result of the first service, so that the access network device sets a DRX parameter based on the jitter information of the first service, for example, determines a time domain position at which the first terminal device starts to monitor a PDCCH. In other words, the first terminal device monitors the PDCCH in a part of on duration in a DRX cycle, and does not need to continuously monitor the PDCCH during the entire on duration, to reduce duration of invalid monitoring of the PDCCH, and reduce power consumption of the terminal device.

In a possible design, the third core network device alternatively determines a jitter range learning result of the first service based on at least one of the following: cell information, where the cell information indicates a cell in which a first terminal device is located; or information about a quality of service QoS flow, where the QoS flow is for carrying service data that is of the first service and that is sent by a second core network device to the first terminal device, and the QoS flow is configured by the first core network device for the second core network device, the access network device, and the first terminal device.

In other words, the third core network device can further perform statistical analysis on the QoS flow or the cell in which the first terminal device is located, to obtain a learning result for a cell or a QoS flow.

In a possible design, the jitter range learning result of the first service includes at least one of a first jitter range and a second jitter range. The first jitter range is related to a first partial time period, the first partial time period is in duration of the first service, and the first service is related to the first terminal device. The second jitter range is a jitter range of the entire duration of the first service.

In this way, the first core network device may provide the access network device with a jitter range of the duration or a partial time period of the first service, so that the access network device can determine the time domain position at which the first terminal device starts to monitor the PDCCH and a start position of the on duration in the DRX cycle.

In a possible design, the jitter range learning result of the first service further includes time information. The time information indicates estimated time at which the service data of the first service arrives at the second core network device.

In this way, the first core network device may provide the access network device with the estimated time at which the service data of the first service arrives at the second core network device, so that the access network device can more accurately determine the time domain position at which the first terminal device starts to monitor the PDCCH and the start position of the on duration in the DRX cycle.

In a possible design, the analytics ID is further for requesting to analyze the estimated time at which the service data of the first service arrives at the second core network device, so that the third core network device provides the time information for the first core network device.

In a possible design, the third core network device is a data analytics network element.

According to a third aspect, a communication method is provided. An execution body of the method may be an access network device, or may be a chip used in the access network device. The following uses an example in which the execution body is the access network device for description. The method includes: The access network device receives first information from a first core network device. The first information includes first jitter information, the first jitter information indicates a first jitter range, the first jitter range is related to a first partial time period, the first partial time period is in duration of a first service, and the first service is related to a first terminal device. Then, the access network device configures a discontinuous reception DRX parameter for the first terminal device in the first partial time period based on the first information.

In a possible design, when the access network device receives the first information from the first core network device in the duration, the first information further includes second jitter information. The second jitter information indicates a second jitter range, and the second jitter range is a jitter range of the entire duration of the first service.

In a possible design, when the access network device receives the first information from the first core network device for the first time in the duration, the first information further includes the second jitter information. The second jitter information indicates the second jitter range, and the second jitter range is the jitter range of the entire duration of the first service.

In a possible design, before the access network device receives first information from a first core network device, the method further includes: The access network device receives second jitter information from the first core network device. The second jitter information indicates a second jitter range, and the second jitter range is a jitter range of the entire duration of the first service.

In a possible design, the first jitter range is less than the second jitter range.

In a possible design, after the access network device receives first information from a first core network device, the method further includes: The access network device receives third jitter information from the first core network device. The third jitter information indicates a third jitter range, the third jitter range is related to a second partial time period, and the second partial time period is in the duration of the first service. Then, the access network device configures the DRX parameter for the first terminal device in the second partial time period based on the third jitter information.

In a possible design, the first information further includes third jitter information. The third jitter information indicates a third jitter range, the third jitter range is related to a second partial time period, and the second partial time period is in the duration of the first service.

In a possible design, that the access network device configures a DRX parameter for the first terminal device in the first partial time period based on the first information includes: The access network device determines, based on the first jitter information, a time domain position at which the first terminal device starts to monitor a PDCCH in the first partial time period, so that the first terminal device does not start to monitor the PDCCH too early, to reduce power consumption on the first terminal device side.

In a possible design, the second jitter information is used by the access network device to configure a length of on duration in a DRX cycle, so that the first terminal device determines a time domain position at which the monitoring of the PDCCH is stopped, to reduce the power consumption on the first terminal device side. The time domain position of the PDCCH is in the on duration in the DRX cycle, and the DRX cycle is in the first partial time period.

In a possible design, the method further includes: The access network device receives time information from the first core network device. The time information is used by the access network device to determine at least one of the following: the time domain position at which the first terminal device starts to monitor the PDCCH in the first partial time period, and/or a position of the on duration.

Because the time information provided by the first core network device can better represent time at which service data of a first service arrives at a second core network device, the access network device determines, based on the time information, at least one of the following: the time domain position at which the first terminal device starts to monitor the PDCCH in the first partial time period, and/or the position of the on duration. This has higher accuracy.

In a possible design, the time information includes first time information and second time information. The first time information is used by the access network device to determine the time domain position at which the first terminal device starts to monitor the PDCCH in the first partial time period. The second time information is used by the access network device to determine the position of the on duration.

Correspondingly, the access network device determines, based on the first time information and the first jitter information, a time domain position at which the first terminal device starts to monitor the PDCCH. The access network device determines a position of the on duration in the DRX cycle based on the second time information and the second jitter information. In other words, the access network device determines, with reference to different time information, the time domain position for starting to monitor the PDCCH and the start position of the on duration. In this way, even if there is a specific deviation between a service periodicity and the DRX cycle, the access network device can accurately set the DRX parameter.

In a possible design, that the access network device receives first information from a first core network device includes: The access network device receives control plane signaling from the first core network device. The first core network device is a session management network element, and the control plane signaling includes the first information.

In a possible design, the control plane signaling is an N2 session management message.

In a possible design, that the access network device receives first information from a first core network device includes: The access network device receives a user data packet from the first core network device. The first core network device is a user plane network element, and the user data packet includes the first information.

In a possible design, the user data packet includes a general packet radio service tunneling protocol user plane GTP-U header, and the GTP-U header includes the first information.

In a possible design, that the access network device receives first information from a first core network device includes: The access network device receives the first information from the first core network device via a fourth core network device.

In a possible design, the first core network device is a session management network element, and the fourth core network device is a user plane network element.

In a possible design, the first core network device is a user plane network element, and the fourth core network device is a session management network element.

According to a fourth aspect, a communication apparatus is provided. The communication apparatus includes a processor. The processor is coupled to a memory, and is configured to read and execute instructions in the memory, so that the communication apparatus performs the method performed by the first core network device according to any one of the foregoing aspects or the possible designs of the foregoing aspects. The communication apparatus may be the first core network device according to any of the first aspect or the possible designs of the first aspect, or a chip that implements a function of the first core network device.

According to a fifth aspect, a chip is provided. The chip includes a processing circuit and an input/output interface. The input/output interface is configured to communicate with a module outside the chip. For example, the chip may be a chip that implements a function of the first core network device according to any one of the first aspect or the possible designs of the first aspect. The processing circuit is configured to run a computer program or instructions, to implement the method according to any one of the first aspect or the possible designs of the first aspect.

According to a sixth aspect, a communication apparatus is provided. The communication apparatus includes a processor. The processor is coupled to a memory, and is configured to read and execute instructions in the memory, so that the communication apparatus performs the method performed by the third core network device according to any one of the foregoing aspects or the possible designs of the foregoing aspects. The communication apparatus may be the third core network device according to any one of the second aspect or the possible designs of the second aspect, or a chip that implements a function of the third core network device.

According to a seventh aspect, a chip is provided. The chip includes a processing circuit and an input/output interface. The input/output interface is configured to communicate with a module outside the chip. For example, the chip may be a chip that implements a function of the third core network device according to any one of the second aspect or the possible designs of the second aspect. The processing circuit is configured to run a computer program or instructions, to implement the method according to any one of the second aspect or the possible designs of the second aspect.

According to an eighth aspect, a communication apparatus is provided. The communication apparatus includes a processor. The processor is coupled to a memory, and is configured to read and execute instructions in the memory, so that the communication apparatus performs the method performed by the access network device according to any one of the foregoing aspects or the possible designs of the foregoing aspects. The communication apparatus may be the access network device according to any one of the third aspect or the possible designs of the third aspect, or a chip that implements a function of the access network device.

According to a ninth aspect, a chip is provided. The chip includes a processing circuit and an input/output interface. The input/output interface is configured to communicate with a module outside the chip. For example, the chip may be a chip that implements a function of the access network device according to any one of the third aspect or the possible designs of the third aspect. The processing circuit is configured to run a computer program or instructions, to implement the method according to any one of the third aspect or the possible designs of the third aspect.

According to a tenth aspect, a computer-readable storage medium is provided. The computer-readable storage medium stores instructions. When the instructions are run on a computer, the computer may be enabled to perform the method according to any one of the foregoing aspects.

According to an eleventh aspect, a computer program product including instructions is provided. When the computer program product runs on a computer, the computer is enabled to perform the method according to any one of the foregoing aspects.

According to a twelfth aspect, a circuit system is provided. The circuit system includes a processing circuit, and the processing circuit is configured to perform the method according to any one of the foregoing aspects.

According to a thirteenth aspect, a communication system is provided, including a first core network device and an access network device. The first core network device is configured to perform the method according to the first aspect, and the access network device is configured to perform the method according to the third aspect.

In a possible design, the communication system further includes a third core network device. The third core network device is configured to perform the method according to the second aspect.

For technical effects brought by any design in the fourth aspect to the thirteenth aspect, refer to beneficial effects in the corresponding method provided above. Details are not described herein again.

### BRIEF DESCRIPTION OF DRAWINGS

FIG. 1 is a diagram of an architecture of a communication system according to an embodiment of this application;
FIG. 2 is a diagram of an architecture of another communication system according to an embodiment of this application;
FIG. 3a is a diagram of an architecture of still another communication system according to an embodiment of this application;
FIG. 3b is a diagram of an architecture of still another communication system according to an embodiment of this application;
FIG. 4a is a diagram of a DRX mechanism configuration according to an embodiment of this application;
FIG. 4b is a diagram of another DRX mechanism configuration according to an embodiment of this application;
FIG. 5a is a diagram of a data scheduling scenario according to an embodiment of this application;
FIG. 5b is a diagram of another data scheduling scenario according to an embodiment of this application;
FIG. 5c is a diagram of still another data scheduling scenario according to an embodiment of this application;
FIG. 6 is a diagram of a jitter range according to an embodiment of this application;
FIG. 7 is a schematic flowchart of a communication method according to an embodiment of this application;
FIG. 8a is a diagram of a jitter range according to an embodiment of this application;
FIG. 8b is a diagram of still another data scheduling scenario according to an embodiment of this application;
FIG. 9 is a diagram of still another data scheduling scenario according to an embodiment of this application;
FIG. 10 is a schematic flowchart of another communication method according to an embodiment of this application;
FIG. 11a is a schematic flowchart of still another communication method according to an embodiment of this application;
FIG. 11b-1 and FIG. 11b-2 are schematic flowcharts of still another communication method according to embodiments of this application;

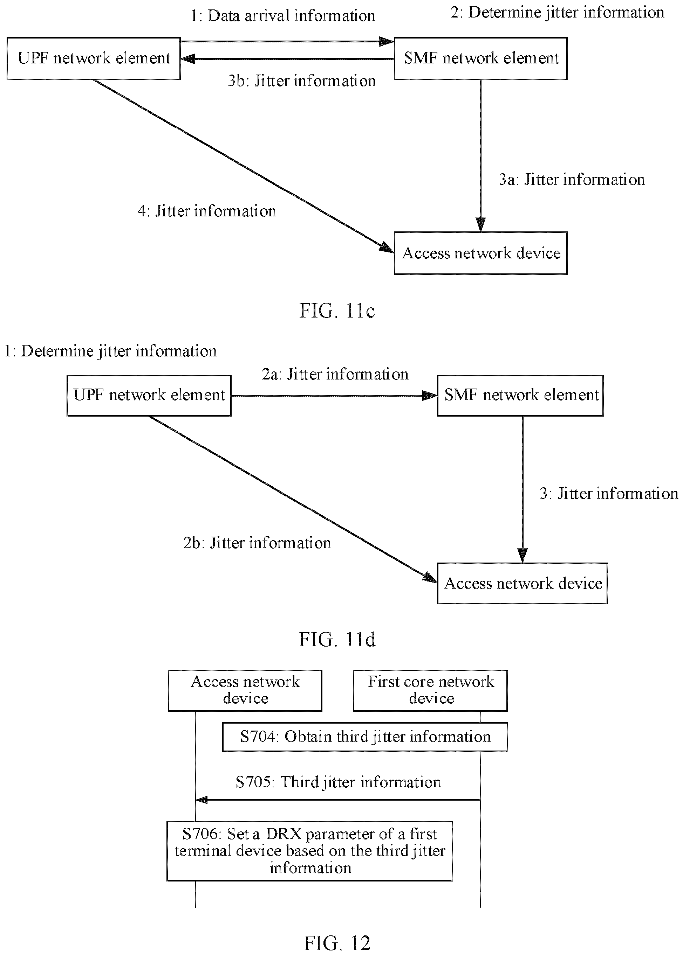

FIG. 11c is a schematic flowchart of still another communication method according to an embodiment of this application;
FIG. 11d is a schematic flowchart of still another communication method according to an embodiment of this application;
FIG. 12 is a schematic flowchart of still another communication method according to an embodiment of this application;

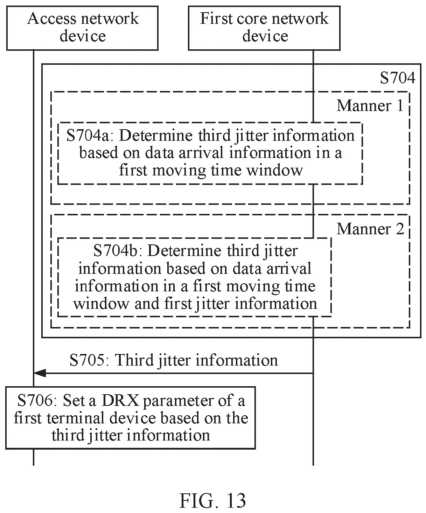

FIG. 13 is a schematic flowchart of still another communication method according to an embodiment of this application;

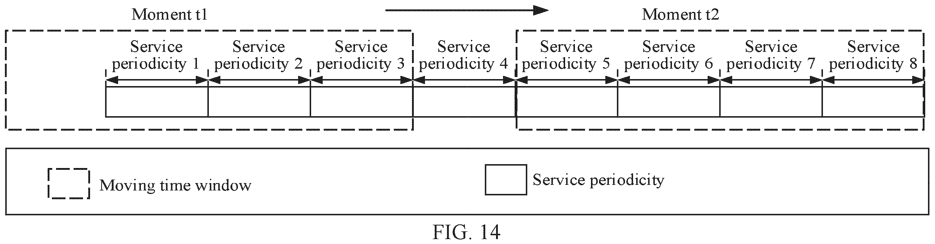

FIG. 14 is a diagram of still another data scheduling scenario according to an embodiment of this application;

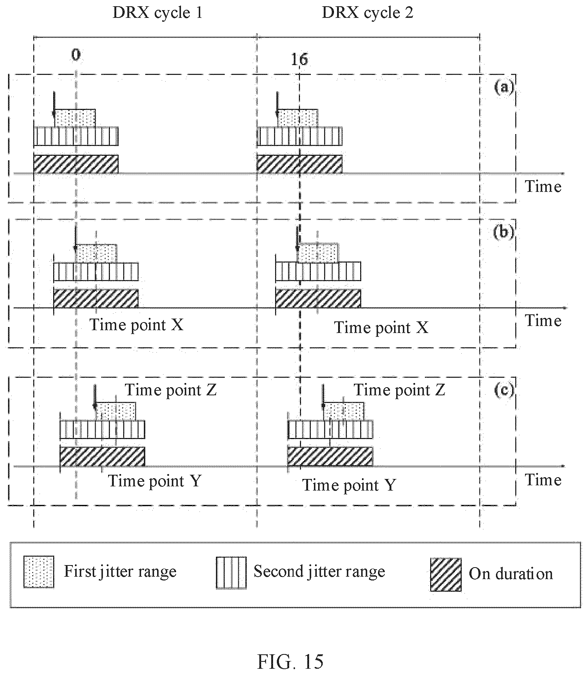

FIG. 15 is a diagram of still another data scheduling scenario according to an embodiment of this application;

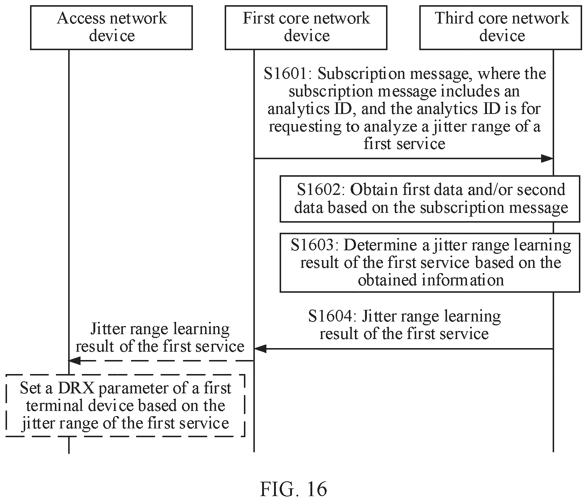

FIG. 16 is a schematic flowchart of still another communication method according to an embodiment of this application;

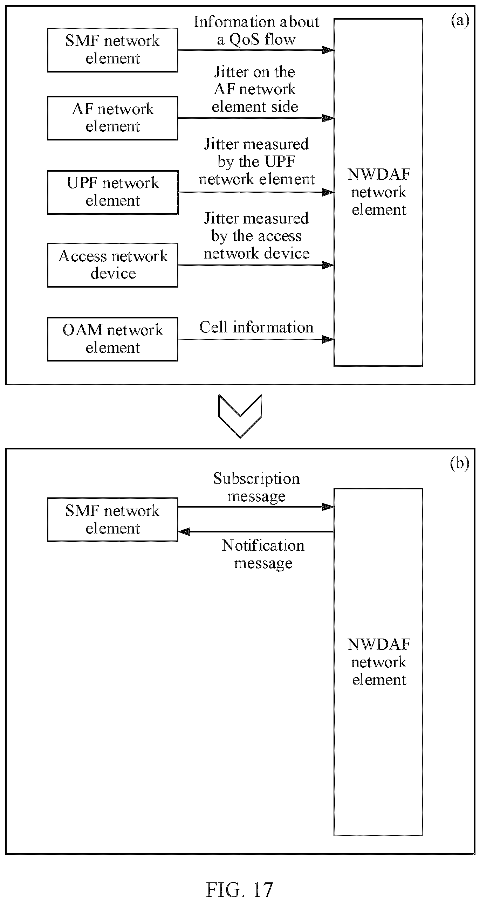

FIG. 17 is a schematic flowchart of still another communication method according to an embodiment of this application; and

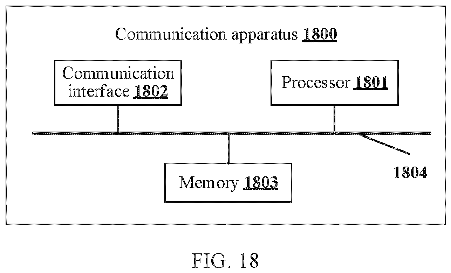

FIG. 18 is a diagram of a structure of a communication apparatus according to an embodiment of this application.

### DESCRIPTION OF EMBODIMENTS

In the specification and accompanying drawings of this application, the terms "first", "second", and the like are intended to distinguish between different objects or distinguish between different processing of a same object, but do not indicate a particular order of the objects. In addition, the terms "including", "having", or any other variant thereof in descriptions of this application are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device. It should be noted that, in embodiments of this application, the word "example" or "for example" is for representing giving an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner. In embodiments of this application, "more than two" includes two. "A plurality of" may include two, may include three, or may include more.

The technical solutions provided in this application may be applied to various communication systems, for example, a long term evolution (long term evolution, LTE) system, an LTE frequency division duplex (frequency division duplex, FDD) system, an LTE time division duplex (time division duplex, TDD) system, an internet of things (internet of things, IoT) system, a narrowband internet of things (narrowband internet of things, NB-IoT) system, wireless fidelity (wireless fidelity, Wi-Fi), a 5th generation (5th generation, 5G) communication system or new radio (new radio, NR), and a 6th generation mobile communication system.

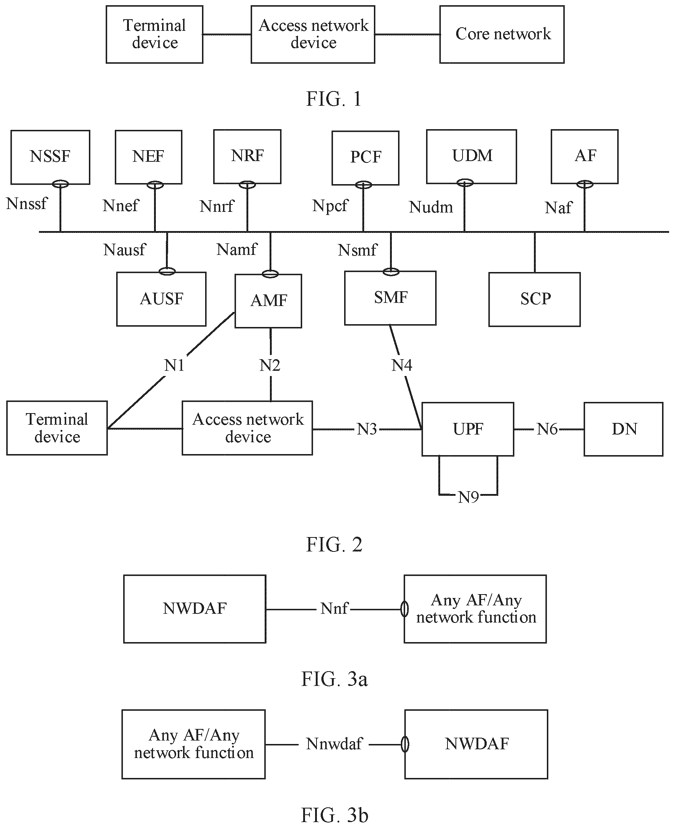

For example, FIG. 1 is a diagram of an architecture of a communication system according to an embodiment of this application. The communication system includes a terminal device, an access network device, and a core network.

The terminal device includes a device that provides a voice and/or data connectivity for a user. Specifically, the terminal device includes a device that provides the voice for the user, includes a device that provides the data connectivity for the user, or includes a device that provides the voice and the data connectivity for the user. For example, the terminal device may include a handheld device with a wireless connection function or a processing device connected to a wireless modem. The terminal device may communicate with the core network via a radio access network (radio access network, RAN), and exchange a voice or data with the RAN, or exchange the voice and the data with the RAN. The terminal device may include user equipment (user equipment, UE), a wireless terminal device, a mobile terminal device, a device-to-device (device-to-device, D2D) communication terminal device, a vehicle-to-everything (vehicle-to-everything, V2X) terminal device, a machine-to-machine/machine-type communication (machine-to-machine/machine-type communication, M2M/MTC) terminal device, an internet of things (internet of things, IoT) terminal device, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. For example, the terminal device may include a mobile phone (or referred to as a "cellular" phone), a computer having a mobile terminal device, or a portable, pocket-sized, handheld, a computer-embedded mobile apparatus, or the like. For example, the terminal device may be a device, such as a personal communication service (personal communication service, PCS) phone, a cordless telephone, a session initiation protocol (session initiation protocol, SIP) phone, a wireless local loop (wireless local loop, WLL) station, or a personal digital assistant (personal digital assistant, PDA). The terminal device further includes a limited device, for example, a device with low power consumption, a device with a limited storage capability, or a device with a limited computing capability. For example, the terminal device includes an information sensing device such as a barcode, radio frequency identification (radio frequency identification, RFID), a sensor, a global positioning system (global positioning system, GPS), or a laser scanner.

If the various terminal devices described above are located in a vehicle (for example, placed in the vehicle or mounted in the vehicle), the terminal devices may be all considered as vehicle-mounted terminal devices. For example, the vehicle-mounted terminal devices are also referred to as on board units (on board units, OBUs).

In embodiments of this application, the terminal device may further include a relay (relay). Alternatively, it may be understood as that any device that can perform data communication with a base station may be considered as a terminal device.

In embodiments of this application, an apparatus configured to implement a function of the terminal device may be a terminal device, or may be an apparatus, for example, a chip system, that can support the terminal device in implementing the function. The apparatus may be mounted in the terminal device. In embodiments of this application, the chip system may be formed by a chip, or may include the chip and another discrete component. In the technical solutions provided in embodiments of this application, an example in which the apparatus configured to implement the function of the terminal is the terminal device is used for description.

The access network device may be an access point for wireless communication or wired communication, for example, a base station or a base station controller, a Wi-Fi access point or a Wi-Fi controller, or an access point for fixed network access. The base station may include various types of base stations, for example, a micro base station (also referred to as a small cell), a macro base station, a relay station, and an access point. This is not specifically limited in embodiments of this application. In embodiments of this application, the base station may be a base station (base transceiver station, BTS) in a global system for mobile communications (global system for mobile communications, GSM) or code division multiple access (code division multiple access, CDMA), a base station (NodeB) in wideband code division multiple access (wideband code division multiple access, WCDMA), an evolved NodeB (evolved NodeB, eNB, or e-NodeB) in LTE, an eNB in IoT or NB-IoT, or a base station in a 5G communication system or a future evolved public land mobile network (public land mobile network, PLMN). This is not limited in embodiments of this application. The access network device may also be described as a radio access network (radio access network, RAN) device.

The core network includes various core network devices. As shown in FIG. 2, the core network device includes a network slice selection function (network slice selection function, NSSF) network element, a network exposure function (network exposure function, NEF) network element, a network function repository function (network exposure function repository function, NRF) network element, a policy control function (policy control function, PCF) network element, a unified data management (unified data management, UDM) network element, an application function (application function, AF) network element, an authentication server function (authentication server function, AUSF) network element, an access and mobility management function (access and mobility management function, AMF) network element, a session management function (session management function, SMF) network element, a service communication proxy (service communication proxy, SCP) network element, a user plane function (user plane function, UPF) network element, a data network (data network, DN), and the like.

Functions of the core network devices are described as follows:

UPF network element: Main functions include data packet routing and forwarding, serving as a mobility anchor and an uplink classifier to support routing of a service flow to a DN, serving as a branching point to support a multi-homing protocol data unit (protocol data unit, PDU) session (session), and the like.

DN: The DN is an operator network that provides a data transmission service for a user, for example, an operator service, internet access, or a third-party service.

AUSF network element: The AUSF network element is mainly responsible for providing an authentication service.

AMF network element: The AMF network element is responsible for mobility management in a mobile network, and main functions include user registration management, reachability detection, SMF node selection, mobility state transition management, and the like.

SMF network element: The SMF network element is responsible for session management in a mobile network, and main functions include control of establishment, modification, and deletion of a session, user plane node selection, and the like.

SCP network element: The SCP network element is mainly responsible for indirect communication between a network element and a corresponding network element service.

NSSF network element: The NSSF network element is mainly responsible for selecting a network slice for a terminal device.

NEF network element: The NEF network element is mainly responsible for network capability information exposure or external information provision with an external third-party application.

NRF network element: The NRF network element is used by an operator network to expose data in a network to a third-party application server, or receive data provided by the third-party application server for the network.

PCF network element: The PCF network element is mainly responsible for providing a policy, for example, a quality of service (quality of service, QoS) policy and a slice selection policy.

UDM network element: The UDM network element is mainly configured to store user data such as subscription information and authentication/authorization information.

AF network element: The AF network element is mainly responsible for providing a service for a 3rd generation partnership project (3rd generation partnership project, 3GPP) network, for example, affecting service routing, and interacting with a PCF to perform policy control.

In a network architecture shown in FIG. 2, N1 is an interface between the terminal device and the AMF network element. N2 is an interface between the access network device and the AMF network element, and is for non-access stratum (non-access stratum, NAS) message sending and the like. N3 is an interface between the access network device and the UPF network element, and is configured to transmit user plane data and the like. N4 is an interface between the SMF network element and the UPF network element, and is configured to transmit information such as tunnel identification information of an N3 connection, data buffer indication information, and a downlink data notification message. An N6 interface is an interface between the UPF network element and the DN, and is configured to transmit user plane data and the like. N9 is an interface between UPF network elements. Nausf is a service-based interface presented by the AUSF network element. Namf is a service-based interface presented by the AMF network element. Nsmf is a service-based interface presented by the SMF network element. Nnssf is a service-based interface presented by the NSSF network element. Nnef is a service-based interface presented by the NEF network element. Nnrf is a service-based interface presented by the NRF network element. Npcf is a service-based interface presented by the PCF network element. Nudm is a service-based interface presented by the UDM network element. Naf is a service-based interface presented by the AF network element.

It should be understood that, for detailed functions of the network elements shown in FIG. 2, refer to a related protocol, a related standard, or the like. N1, N2, N3, N4, N6, N9, and the like shown in FIG. 2 are interface sequence numbers. For example, for meanings of the interface sequence numbers, refer to meanings defined in a 3GPP standard protocol. The meanings of the interface sequence numbers are not limited in this application.

It should be further understood that names of the core network devices, such as the SMF and the AMF, are merely names, and constitute no limitation on the devices. It may be understood that in a 5G network and another future network, the name may alternatively be another name. This is not specifically limited in embodiments of this application. For example, the AMF network element may also be referred to as an AMF or an AMF entity. This is uniformly described herein, and details are not described below again.

Optionally, the network element may be implemented by one device, may be jointly implemented by a plurality of devices, or may be one functional module in one device. This is not specifically limited in embodiments of this application. It may be understood that the functional module may be a network element in a hardware device, may be a software functional module running on dedicated hardware, or may be a virtualized functional module instantiated on a platform (for example, a cloud platform).

For example, FIG. 3a and FIG. 3b are diagrams of architectures of another communication system according to embodiments of this application. The communication system includes a network data analytics function (network data analytics function, NWDAF) network element and another network element that interacts with the NWDAF network element. FIG. 3a shows an architecture used during data collection. To be specific, the NWDAF network element invokes a service of another network element in a 5G core network, to collect input information needed for network analysis. FIG. 3b shows an architecture used during data exposure. To be specific, the NWDAF network element sends, by providing an NWDAF service, analysis data to a network element that subscribes to or requests the analysis data. The NWDAF represents a network analysis logical function managed by an operator. The NWDAF network element provides network data analysis at a slice level for another network element, provides network analysis information at a network slice instance level, and does not need to learn of a current subscriber who uses a slice. "Any NF" shown in FIG. 3a and FIG. 3b represents any network function network element, and "Nnf" and "Nnwdaf" represent names of service-based interfaces. For details, refer to related descriptions in a 3GPP standard protocol. Details are not described herein again.

For ease of understanding embodiments of this application, the following first briefly describes terms in embodiments of this application. It should be understood that these descriptions are merely for ease of understanding embodiments of this application, and should not constitute any limitation on this application.

### 1. DRX mechanism

To reduce power consumption of a terminal device, an access network device may configure a DRX mechanism for the terminal device. The DRX mechanism may be classified into two types: idle (idle) mode DRX and connected mode discontinuous reception (connected mode discontinuous reception, C-DRX). The two types of DRX mechanisms are different. Details are described as follows.

In the idle mode DRX, the terminal device mainly monitors paging of the access network device, and the terminal device monitors a paging occasion (paging occasion) once in a DRX cycle (DRX cycle).

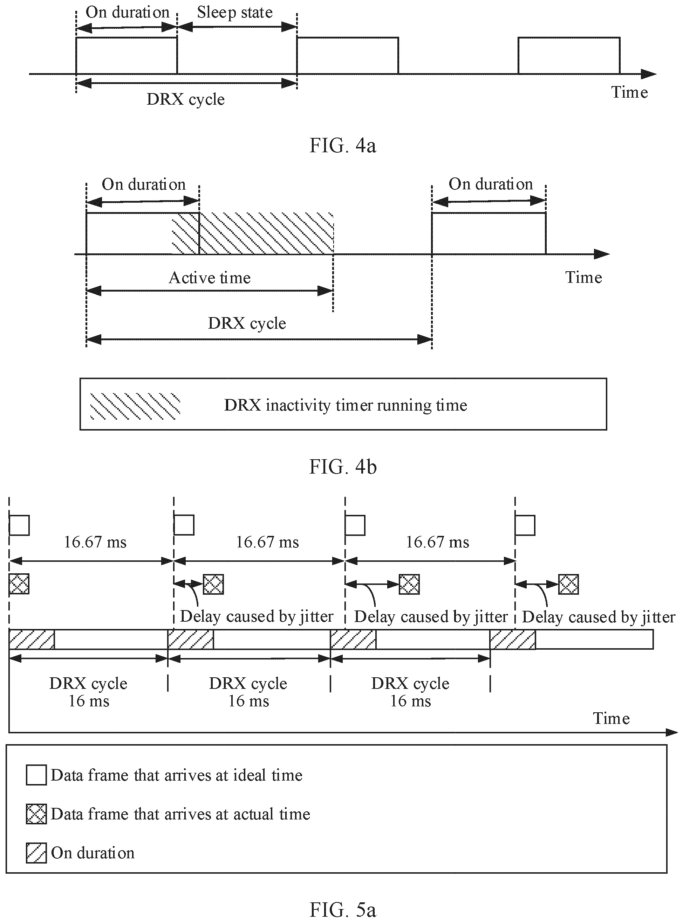

Refer to FIG. 4a. In the C-DRX mechanism, the terminal device may periodically enter a sleep state, and does not need to monitor a PDCCH. A DRX cycle at least includes time of a DRX on duration timer (drx-on Duration Timer) and a possible sleep time period (opportunity for drx). The time of the DRX on duration timer is also referred to as "on duration (on duration)." The access network device configures a DRX parameter for the terminal device by using radio resource control (radio resource control, RRC) signaling, for example, a parameter such as a DRX cycle length (DRX cycle length), a DRX on duration timer, a DRX inactivity timer (drx-InactivityTimer), a DRX hybrid automatic repeat request round trip timer (drx-hybrid auto repeat request round trip timer, drx-HARQ-RTT-Timer), or a DRX retransmission timer (drx-RetransmissionTimer). The terminal device needs to monitor the PDCCH during start periods of the DRX on duration timer, the DRX inactivity timer, a downlink (downlink, DL) DRX retransmission timer, and an uplink (uplink, UL) DRX retransmission timer. The time is also collectively referred to as active time (Active Time). Remaining time is collectively referred to as outside active time (outside Active Time). In the outside active time, the terminal device does not need to monitor the PDCCH. In this case, the terminal device may enter the sleep state, to reduce the power consumption.

It should be understood that the DRX on duration timer indicates duration in which the terminal device continuously monitors the PDCCH when the DRX cycle starts. The DRX inactivity timer indicates duration in which the terminal device starts (or restarts) the timer and keeps monitoring the PDCCH when detecting that the PDCCH is for scheduling initially transmitted uplink or downlink data.

In addition, the DRX parameter further includes a DRX long cycle and start offset (drx-LongCycleStartOffset), and the parameter is for configuring a length of a long DRX cycle and an offset value of a start position of a DRX cycle (regardless of a long DRX cycle or a short DRX cycle). The length of the long DRX cycle is in a unit of millisecond ms, and a configuration granularity of the start offset is 1 ms. In addition, the DRX parameter further includes a DRX slot offset value (drx-SlotOffset), and the parameter is for configuring a delay value before drx-onDurationTimer is started. A configuration granularity of the parameter is 1/32 ms, and a value range is from 0 to 31, that is, from 0 ms to 31/32 ms. When the access network device enables a short DRX cycle for the terminal device, the DRX parameter may further include a short cycle (shortDRX), and the parameter is for configuring a length of the short DRX cycle. In the parameters, drx-LongCycleStartOffset and/or shortDRX may be for determining a DRX cycle, and drx-LongCycleStartOffset and/or drx-SlotOffset may be for determining a DRX start offset value. In embodiments of this application, the DRX cycle may be understood as being determined based on drx-LongCycleStartOffset and/or shortDRX, and the DRX start offset value may be understood as being determined based on drx-LongCycleStartOffset and/or drx-SlotOffset.

For example, a cycle length supported in the C-DRX mechanism is described as follows: The length of the long DRX cycle is {10, 20, 32, ...} ms, which may be understood as that the length of the long DRX cycle is 10 ms, 20 ms, 32 ms, or the like. The length of the short DRX cycle is {2, 3, 4, 5, 6, 7, 8, 10, 14, 16, 20, 30, 32, ...} ms, which may be understood as that the length of the short DRX cycle is 2 ms, 3 ms, 4 ms, 5 ms, 6 ms, 7 ms, 8 ms, 10 ms, 14 ms, 16 ms, 20 ms, 30 ms, 32 ms, or the like.

Downlink transmission is used as an example. A general DRX process is as follows. After entering a DRX cycle, the terminal device starts to continuously monitor the PDCCH in an on duration (on duration) time period.

If no PDCCH is detected in the on duration time period, the terminal device directly enters the sleep state after the on duration time period ends, as shown in FIG. 4a.

If the PDCCH is detected in the on duration time period, and the PDCCH is for scheduling newly transmitted data (in other words, the PDCCH is for transmitting scheduling information for initial transmission scheduling), the terminal device receives the data (in other words, receives a PDSCH) based on the received scheduling information, and starts the DRX inactivity timer. Each time the terminal device detects the scheduling information for the initial transmission scheduling, the DRX inactivity timer is started (or restarted) once. The terminal device continuously monitors the PDCCH during timing of the DRX inactivity timer until the DRX inactivity timer expires (expires), and the terminal device enters the sleep state, as shown in FIG. 4b.

It should be understood that the terminal device periodically monitors the PDCCH in each on duration time period. In FIG. 4a and FIG. 4b, a solid line box represents the on duration time period.

### 2. XR

The XR is a reality and virtuality combined human-computer interactive environment generated by using a computer technology and a wearable device. The XR is proposed based on augmented reality (augmented reality, AR), virtual reality (virtual reality, VR), and mixed reality (mixed reality, MR). In other words, to avoid concept confusion, the XR is actually a general term, including the AR, the VR, and the MR. An XR service aims to use a high-speed network and a technology, for example, 360-degree imaging, to achieve an interactive immersive experience effect. The XR service has the following characteristics: a large service volume, a high transmission delay requirement (in other words, a transmission delay needs to be reduced as much as possible), a short interval of arrival of data frames, a definite service periodicity, or the like.

In a scenario in which an access network device transmits a data frame of an XR or XR-like service to a terminal device, the data frame has a definite periodicity. For example, when a data frame rate is 60 frames per second (frames per second, fps), an average time interval of arrival of service data corresponding to two adjacent data frames is 16.67 ms. An ideal time interval of arrival of data frames on the terminal device side may be 16.67 ms. It should be understood that the data frame is defined from a perspective of an application layer, and one data frame may also be replaced with one video frame. One protocol data unit set (protocol data unit set, PDU set) includes service data in one data frame (frame). The PDU set is defined from a perspective of a MAC layer. One data frame may also be replaced with one PDU set.

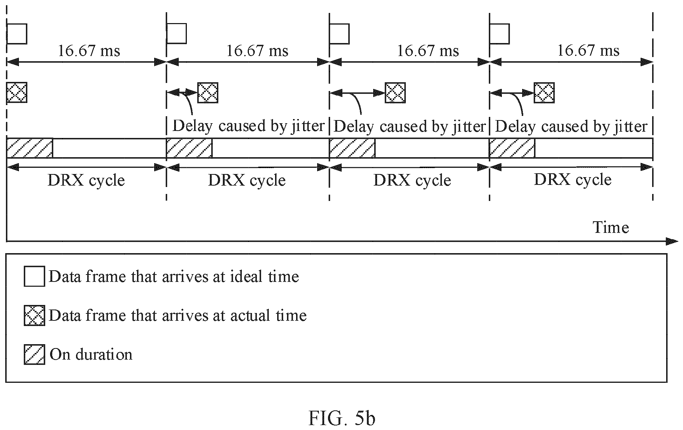

As shown in FIG. 5a, the access network device may configure, for the terminal device, a DRX cycle length close to the time interval of arrival of the data frames. For example, the DRX cycle length may be 16 ms or 17 ms. Alternatively, as shown in FIG. 5b, the access network device may configure, for the terminal device, a DRX cycle length equal to the time interval of arrival of the data frames, that is, 16.67 ms.

It should be understood that a start position of on duration in a DRX cycle may overlap a service periodicity (for example, a position shown by a dashed line) of the XR service. In this case, it may also be described as that the DRX cycle matches the service periodicity. Alternatively, a start position of on duration in a DRX cycle may not overlap a service periodicity (for example, a position shown by a dashed line) of the XR service, and a difference is within a specific range. Alternatively, a start position of on duration in some DRX cycles overlaps a service periodicity (for example, a position shown by a dashed line) of the XR service, and a difference between the start position of the on duration in the DRX cycle and the service periodicity (for example, the position shown by the dashed line) of the XR service is within a specific range. In this case, it may also be described as that the DRX cycle approximately matches the service periodicity. In embodiments of this application, an example in which the DRX cycle matches the service periodicity is used for description.

Although the XR service has a definite periodicity in general, because the application server processes different data frames at different speeds, different data frames arrive at the access network device (for example, a base station) from the application server via the Internet and a core network in different routing manners, and system load changes, a jitter (jitter) phenomenon may occur on time at which the data frame actually arrives at the access network device (for example, the base station). In other words, the original periodicity has specific jitter. Correspondingly, jitter may also occur on time at which the data frame arrives at the terminal device. For example, duration of the jitter may be from 0 ms to 8 ms. As shown in FIG. 5b, time of arrival of the data frame may be delayed by 0 ms to 8 ms, in other words, the time interval of arrival of the data frames fluctuates from 16.67 ms to 24.67 ms. If actual time of arrival of the data frame is outside the on duration in the DRX cycle, in other words, the terminal device receives no data scheduling in the on duration, the terminal device does not monitor a PDCCH after the on duration. In this case, the access network device delays the data frame to a next DRX cycle for scheduling. Because the DRX cycle length is approximately from 16 ms to 17 ms, and that the data frame is delayed to the next DRX cycle for scheduling causes a high delay of the data frame of the XR service on the terminal device side, a freezing phenomenon may occur, and user experience of the XR service is affected.

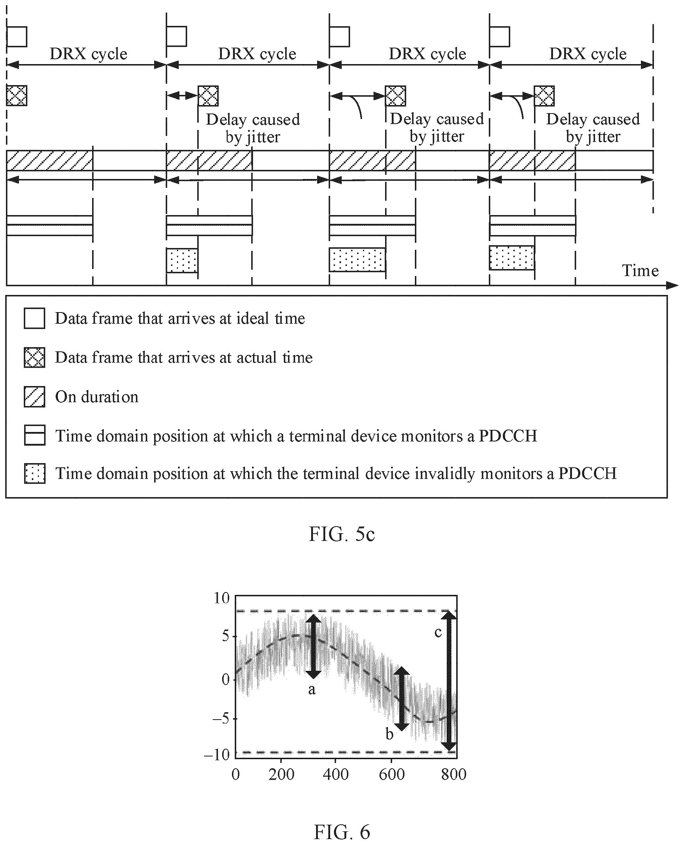

In some embodiments, the access network device may configure the on duration in the DRX cycle to be long, so that a problem of delayed arrival of the data frame caused by the jitter can be resolved, and the time of arrival of the data frame can be in the on duration as much as possible. As shown in FIG. 5c, the start position of the on duration is configured at an earliest position at which the data frame may arrive, and a length of the on duration is configured to cover a maximum jitter range, so that the length of the on duration is sufficient to cover all possible time periods in which the data frame arrives. For example, the on duration is configured as 8 ms. However, a configuration of an excessively long DRX on duration causes excessively long active time of the terminal device. In this case, the terminal device performs invalid monitoring of the PDCCH (in other words, the terminal device monitors the PDCCH but receives no data scheduling information) in a time period before the PDCCH arrives, in other words, the on duration (on duration) in the DRX cycle (DRX cycle) and an occasion for monitoring the PDCCH are not properly set. As a result, the PDCCH monitoring performed by the terminal device before the terminal device detects the PDCCH is meaningless, power consumption is wasted, and it is difficult to achieve an energy saving effect.

In view of this, embodiments of this application provide two communication methods. The methods may be applied to the communication system in FIG. 1 or FIG. 2. The following first describes a basic assumption on which the communication methods in embodiments of this application depend. FIG. 6 shows a jitter value of a service. An XR service is used as an example. In FIG. 6, a horizontal axis is an index (index) of a data frame of the XR service, and a vertical axis is the jitter value. It can be learned from FIG. 6 that a jitter value of each data frame fluctuates around 0. In addition, a jitter range of all data frames in FIG. 6 is a range indicated by a vertical double-headed arrow c, or is a range indicated by two horizontal dashed lines in FIG. 6. In this embodiment of this application, the jitter range is described as a second jitter range, or may be understood as a result of estimating a jitter range of a service, by a communication device (for example, a terminal device, an access network device, or a core network device), in duration. However, from a local perspective, a jitter range of data frames (for example, dozens of adjacent data frames) within a period of time is small, as shown by a left vertical double-headed arrow a and a vertical double-headed arrow b in FIG. 6. In other words, a change amplitude of the jitter of the data frame during short time is smaller than that of the jitter of the data frame during long time, and there is a "slow change" trend (as shown by a dashed curve in FIG. 6) on the whole. In this embodiment of this application, the jitter ranges shown by the double-headed arrow a and the vertical double-headed arrow b are described as a first jitter range, or may be understood as a result of estimating a jitter range of a service, by the communication device (for example, the terminal device, the access network device, or the core network device) in a partial time period in duration. It is easy to understand that the first jitter range is less than the second jitter range.

In other words, a difference between jitter values of adjacent or close data frames is not excessively large, and the jitter values have a specific correlation. In view of this, the terminal device may use an arrival position of a current data frame as a reference, and then determine a fluctuation range of an arrival position of a next data frame with reference to the first jitter range. The terminal device may monitor a PDCCH only within the small fluctuation range (namely, the fluctuation range that is of the arrival position of the data frame and that is determined with reference to the first jitter range), and does not need to monitor the PDCCH within the second jitter range, so that power consumption of monitoring the PDCCH by the terminal device is reduced.

It should be understood that, in the following embodiments of this application, a name of a message between devices or a name or the like of each parameter in the message is merely an example, and may alternatively be another name in a specific implementation. This is not specifically limited in embodiments of this application.

In the communication methods provided in embodiments of this application, a first core network device obtains first information. The first information includes first jitter information, the first jitter information indicates a first jitter range, the first jitter range is related to a first partial time period, the first partial time period is in duration of a first service, and the first service is related to a first terminal device. Then, the first core network device sends the first information to an access network device, where the first information is associated with a setting of a DRX parameter. In this way, the access network device may set the DRX parameter based on the first jitter information, for example, determine a time domain position at which the first terminal device starts to monitor a PDCCH. In other words, the first terminal device monitors the PDCCH in a part of on duration in a DRX cycle, and does not need to continuously monitor the PDCCH during the entire on duration, to reduce duration of invalid monitoring of the PDCCH, and reduce power consumption of the terminal device.

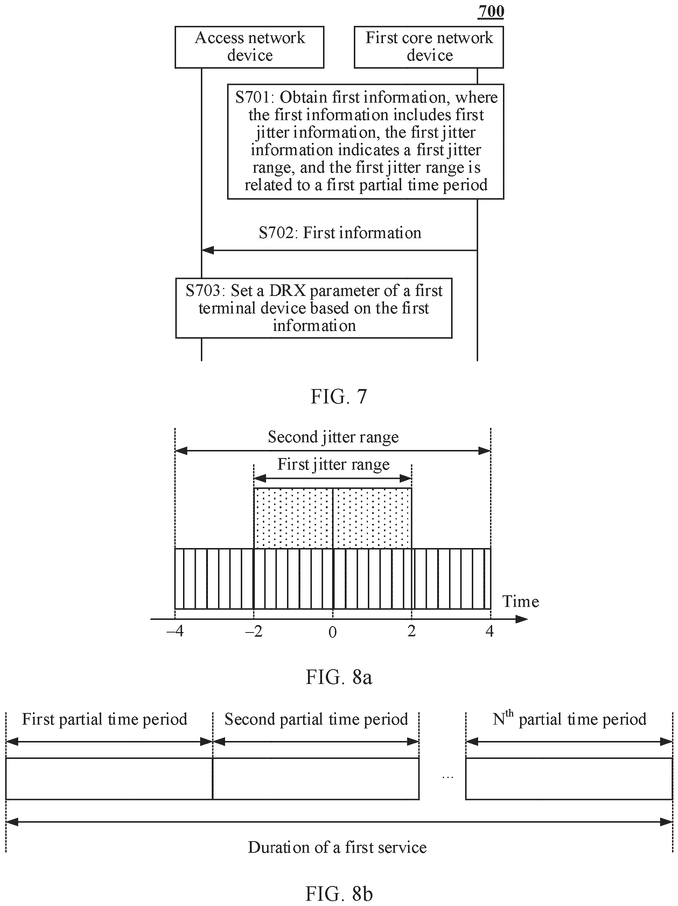

With reference to FIG. 7 to FIG. 17, the following describes in detail the communication methods provided in embodiments of this application. A communication method 700 provided in an embodiment of this application includes the following steps.

S701: A first core network device obtains first information.

For example, the first core network device may be a user plane management network element, for example, the UPF network element in FIG. 2. Alternatively, the first core network device may be a session management network element, for example, the SMF network element in FIG. 2.

Jitter information in the first information indicates a jitter range of a first service. For example, the jitter range indicated by the first information may be a jitter range estimation result, for example, a jitter range estimation result obtained through estimation based on historical data. The following describes the jitter information in the first information by using four examples (Example 1 to Example 4).

Example 1: The first information includes first jitter information, but does not include second jitter information.

Example 2: The first information includes first jitter information and second jitter information.

Example 3: The first information includes first jitter information and third jitter information, but does not include second jitter information.

Example 4: The first information includes first jitter information, second jitter information, and third jitter information.

The first jitter information is described as follows.

The first jitter information indicates a first jitter range. The first jitter range is related to a first partial time period, the first partial time period is in duration of the first service, and the first service is related to a first terminal device. In other words, the first jitter range is a jitter range estimation result in the first partial time period in the duration of the first service.

For example, the first service may be an XR service, for example, a VR video, an AR video, or a cloud game service.

For example, the duration of the first service may be understood as a time period in which the first terminal device is continuously served by the first service. For example, a game application runs on the first terminal device. In a running time period of the game application, an application server may provide a continuous service of the first service for the first terminal device, and the time period is the duration of the first service on the first terminal device. Correspondingly, a start moment and an end moment of the duration of the first service are not fixed, and are determined based on a time period in which an application runs on the first terminal device.

For example, the first partial time period may be understood as a partial time period in the duration of the first service. For example, a start moment of the first partial time period may be a moment at which the first core network device performs S702, or a moment at which an access network device performs S702. When the first core network device updates a jitter range of a partial time period in real time, an end moment of the first partial time period may be a moment at which the first core network device performs S705, or a moment at which the access network device performs S705. Correspondingly, the start moment and the end moment of the first partial time period are not fixed, and are determined based on execution moments of S702 and S705. In this case, it may be understood as that the first core network device updates the jitter range of the partial time period (namely, a small jitter range) in real time.

When the first core network device delivers jitter ranges of a plurality of partial time periods at a time, an end moment of the first partial time period may be a start moment of a next partial time period (a second partial time period below) of the first partial time period, as shown in FIG. 8b. For example, as shown in FIG. 8a, the first jitter range is [-2, 2] ms.

The second jitter information is described as follows.

The second jitter information indicates a second jitter range. The second jitter range is a jitter range of the entire duration of the first service. In other words, the second jitter range is a jitter range estimation result in the entire duration of the first service. For the duration of the first service and the first service, refer to the descriptions of the first jitter information. Details are not described herein again. For example, as shown in FIG. 8a, the second jitter range is [-4, 4] ms.

In this embodiment of this application, the first jitter range is less than the second jitter range. Alternatively, the first jitter range is within the second jitter range, as shown in FIG. 8a.

The third jitter information is described as follows.

The third jitter information indicates a third jitter range. The third jitter range is related to a second partial time period, and the second partial time period is in the duration of the first service. In other words, the third jitter range is a jitter range estimation result in the second partial time period in the duration of the first service. For the duration of the first service and the first service, refer to the descriptions of the first jitter information. Details are not described herein again.

For example, the second partial time period may be understood as a partial time period in the duration of the first service. For example, a start moment of the second partial time period may be the end moment of the first partial time period. In other words, the first partial time period and the second partial time period are different partial time periods, and the first partial time period and the second partial time period are consecutive in time domain.

Similarly, an end moment of the second partial time period is not fixed. For example, the end moment of the second partial time period may be a start moment of a next partial time period (for example, a third partial time period) of the second partial time period, as shown in FIG. 8b.

For example, the third jitter range is [-3, 3] ms.

It should be understood that, in Example 1 to Example 4, only the first jitter information and the third jitter information are used as examples to describe the jitter range of the partial time period. Certainly, the first information may further include jitter information in a plurality of partial time periods. For example, the first information includes jitter information in N partial time periods. N is a positive integer. The N partial time periods are respectively denoted as a partial time period 1, a partial time period 2, ..., a partial time period N-1, and a partial time period N. The partial time period 1 to the partial time period N may be different partial time periods in the duration of the first service. A start moment of the partial time period 1 may be the moment at which the first core network device performs S702, or the moment at which the access network device performs S702. A start moment of the partial time period 2 may be an end moment of the partial time period 1. Another partial time period may be deduced by analogy. An end moment of the partial time period N may be a moment of the duration of the first service. In this case, it may be understood as that the first core network device obtains a plurality of first jitter ranges, to deliver the plurality of jitter ranges to the access network device at a time.

In addition, manners of representing the jitter range are described as follows.

Manner 1: A minimum value and a maximum value are used for representation. For example, the jitter range is denoted as [minimum value, maximum value]. For example, the first jitter range is [-2, 2] ms, and the second jitter range is [-4, 4] ms.

Manner 2: The first jitter range is represented by using the second jitter range and a deviation. For example, if the second jitter range is [-4, 4] ms, and the deviation is 2 ms, it may be determined, based on deviation information, that a start position of the first jitter range is -2 ms.

Manner 3: The first jitter range is represented by using the second jitter range, a deviation, and a length. For example, if the second jitter range is [-4, 4] ms, the deviation is 2 ms, and the length is 4 ms, it may be determined, based on deviation information and length information, that a start position of the first jitter range is -2 ms and an end position is 2 ms.

Manner 4: A reference range and a piece of length information are used. The reference range is determined based on the first jitter range and the second jitter range, and the length information indicates a length of the first jitter range.

For example, the second jitter range is [-4, 4] ms, and the first jitter range is [-2, 2] ms. In Manner 4, a reference range [-2, 4] and a piece of length information [4] may be used for representation.

For an implementation process of S701, refer to descriptions in S701a to S701c. Details are not described herein.

For the first core network device, after obtaining the first information, the first core network device performs S702.

S702: The first core network device sends the first information to the access network device. Correspondingly, the access network device receives the first information from the first core network device.

The first information in S702 is consistent with the first information in S701. Details are not described herein again.

For example, when the first core network device is the session management network element, the first information may be transmitted by using control plane signaling. When the first core network device is the user plane management network element, the first information may be transmitted by using user plane data. For an implementation process of S702, refer to descriptions in S702a to S702d. Details are not described herein.

S703: The access network device sets a DRX parameter of the first terminal device based on the first information, to perform a power saving operation on the first terminal device in the first partial time period.

The first information in S703 is consistent with the first information in S702. Details are not described herein again. It can be learned from S703 that the first information is associated with the setting of the DRX parameter.

For example, when the first information includes the first jitter information (for example, in Example 1 to Example 4 in S701), S703 performed by the access network device includes: The access network device determines, based on the first jitter information, a time domain position at which the first terminal device starts to monitor a PDCCH in the first partial time period.

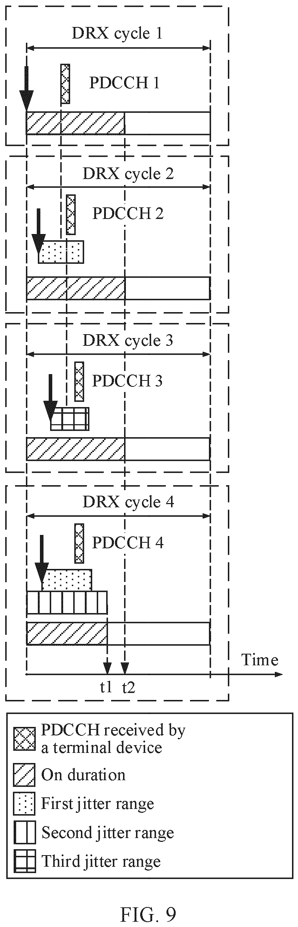

As shown in FIG. 9, in a DRX cycle 1, the access network device does not perform the power saving operation on the first terminal device based on the first information. Correspondingly, the first terminal device starts to monitor the PDCCH at a start position of on duration in the DRX cycle 1, as shown by a thick solid line arrow in the DRX cycle 1, and continuously monitors the PDCCH during the entire on duration.

As shown in FIG. 9, in a DRX cycle 2, the access network device sets the DRX parameter for the first terminal device based on the first jitter information. For example, the first terminal device starts to monitor the PDCCH at a position of the on duration in the DRX cycle 2, as shown by the thick solid line arrow in the DRX cycle 2. For example, the time domain position at which the first terminal device starts to monitor the PDCCH is determined based on the first jitter range. The first jitter range represents an offset relative to a start position of the DRX cycle 2. For example, the first jitter range is [1, 3] ms. In other words, in the DRX cycle 2, the time domain position at which the first terminal device starts to monitor the PDCCH is 1 ms after the start position of the DRX cycle 2.

For another example, when the first information includes the second jitter information (for example, in Example 2 and Example 4 in S701), S703 performed by the access network device includes: The access network device determines a start position of on duration (OnDuration) of a DRX cycle in the duration of the first service based on the second jitter information. In other words, the access network device determines the start position of the on duration in the DRX cycle based on the jitter range of the entire time period (namely, a large jitter range). A time domain position of a PDCCH is in the on duration in the DRX cycle, and the first partial time period includes one or more DRX cycles. In this way, the access network device sends the PDCCH to the first terminal device in the on duration in the DRX cycle. Correspondingly, the first terminal device has started to monitor the PDCCH, and can receive the PDCCH from the access network device.

As shown in FIG. 9, in a DRX cycle 4, the access network device sets the DRX parameter for the first terminal device based on the second jitter information. For example, a length of on duration (OnDuration) in the DRX cycle 4 is equal to the second jitter range. The length of the on duration (OnDuration) in the DRX cycle 4 is different from a length of on duration in a DRX cycle 3. The length of the on duration (OnDuration) in the DRX cycle 4 is determined based on the third jitter information. For example, the third jitter range is [0.5, 4] ms. In other words, in the DRX cycle 4, the time domain position at which the first terminal device starts to monitor the PDCCH is 0.5 ms after a start position of the DRX cycle 4. The length of the on duration (OnDuration) in the DRX cycle 3 is determined based on a parameter preconfigured by the access network device.

For still another example, when the first information includes the third jitter information (for example, in Example 3 and Example 4 in S701), S703 performed by the access network device includes: The access network device determines, based on the third jitter information, a time domain position at which the terminal device starts to monitor a PDCCH in the second partial time period.

As shown in FIG. 9, in a DRX cycle 3, the access network device sets the DRX parameter for the first terminal device based on the third jitter information. For example, the first terminal device starts to monitor the PDCCH at a position of on duration in the DRX cycle 3, as shown by a thick solid line arrow in the DRX cycle 3. For example, the time domain position at which the first terminal device starts to monitor the PDCCH is determined based on the third jitter range. The third jitter range represents an offset relative to a start position of the DRX cycle 3. For example, the third jitter range is [2, 3] ms. In other words, in the DRX cycle 3, a time domain position at which the first terminal device starts to monitor the PDCCH is 2 ms after the start position of the DRX cycle 3.

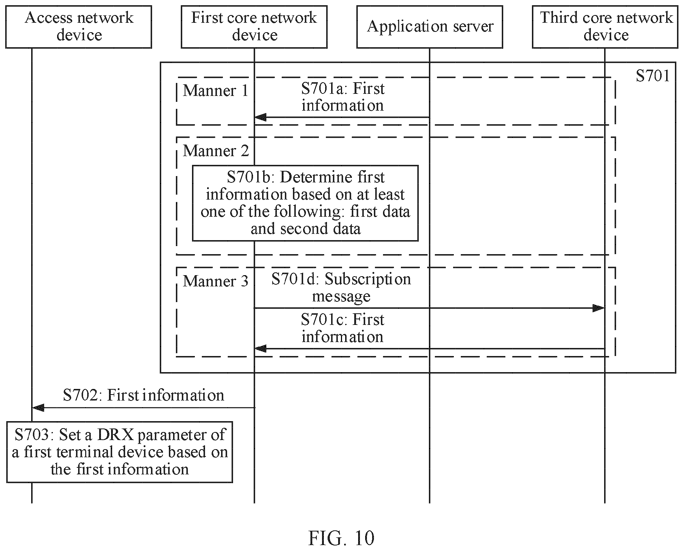

The following describes an implementation process of S701 with reference to FIG. 10.

As shown in a block in which "Manner 1" in FIG. 10 is located, S701 includes S701a.

S701a: The application server sends the first information to the first core network device. Correspondingly, the first core network device receives the first information from the application server.

For example, the application server may be the AF network element in FIG. 2. In this case, the jitter information in the first information may be understood as a deviation of a moment at which the application server generates service data of the first service. For example, the deviation is an inherent jitter range due to reasons such as performance and load of the application server when the application server generates the service data. In other words, only inherent jitter is considered for the jitter information in S701a.

As shown in a block in which "Manner 2" in FIG. 10 is located, S701 includes S701b.

S701b: The first core network device determines the first information based on at least one of the following:
Information a1: The information a1 is first data. The first data includes a deviation of a moment at which the application server generates service data of the first service. For example, the deviation is an inherent jitter range due to reasons such as performance and load of the application server when the application server generates the service data, for example, the first jitter range (namely, a local range of inherent jitter, or described as an inherent small jitter range), and/or the second jitter range (namely, an overall range of the inherent jitter, or described as an inherent large jitter range). It may also be understood as that the first data represents a jitter range of an application layer, for example, a large jitter range of the application layer and a small jitter range of the application layer. It should be understood that the first data in S701b is provided by the application server for the first core network device.

Information a2: The information a2 is second data. The second data includes jitter of the service data that is of the first service and that is generated in the following process: a transmission process from the application server to a second core network device, and/or a transmission process from the second core network device to the access network device. The second core network device may be a user plane network element, for example, the UPF network element in FIG. 2. In other words, the second data represents jitter caused by network transmission. It should be understood that when the first core network device is the UPF network element, the first core network device and the second core network device are a same device. When the first core network device is the SMF network element, the first core network device and the second core network device are different devices.

In S701b, in a possible manner, the first core network device determines the first information based on the first data, for example, uses the first data as the first information. Alternatively, in another possible manner, the first core network device determines the first information based on the second data, for example, uses the second data as the first information. Alternatively, in still another possible manner, the first core network device determines the first information based on the first data and the second data. For example, after performing a specific operation on the first data and the second data, the first core network device uses an operation result as the first information.

It should be understood that the jitter generated in the transmission process from the application server to the second core network device may be represented by using data provided by the second core network device for the first core network device, for example, jitter information measured by a UPF network element, namely, a superposition of AF jitter and fixed network jitter. The AF jitter is the first data. The fixed network jitter is jitter generated from the application server to the UPF network element in a 3GPP network. The jitter generated in the transmission process from the application server to the access network device may be represented by using data provided by the access network device for the first core network device, for example, jitter information measured by the access network device, namely, jitter measured by the UPF network element and jitter generated from the UPF network element to the access network device.

In some embodiments, the first core network device alternatively determines the first information based on at least one of the following:
Information a3: The information a3 is cell information. The cell information indicates a cell in which the terminal device is located. For example, the cell information includes a cell identifier, frequency information, signal strength, signal quality, and the like.

Information a4: The information a4 is information about a quality of service (quality of service, QoS) flow, for example, a QoS identifier and a QoS configuration parameter. The QoS flow is for carrying service data of the first service provided by the application server for the first terminal device. The QoS flow is configured by the first core network device for a second core network device, the access network device, and the first terminal device. For a configuration process of the QoS flow, refer to a conventional technology. Details are not described herein again.

As shown in a block in which "Manner 3" in FIG. 10 is located, S701 includes S701c.

S701c: A third core network device sends the first information to the first core network device. Correspondingly, the first core network device receives the first information from the third core network device.

For example, the third core network device may be a data analytics network element, for example, the NWDAF network element in FIG. 2. For a process in which the third core network device obtains the first information, refer to descriptions of a jitter range learning result of a first service in FIG. 16. Details are not described herein.

In Manner 3 of S701, before performing S701c, the first core network device may further perform S701d.

S701d: The first core network device sends a subscription message to the third core network device. Correspondingly, the third core network device receives the subscription message from the first core network device.

The subscription message includes an analytics identifier (Analytics ID), and the analytics ID is for requesting to analyze the jitter information of the first service. For example, Analytics ID=Jitter, application may be understood as that the analytics ID is for requesting to analyze jitter information of an application. The application is for providing a continuous service of the first service for the first terminal device.

It should be understood that the three manners in FIG. 10 are applicable to four cases (Example 1 to Example 4 in S701) corresponding to the first information.

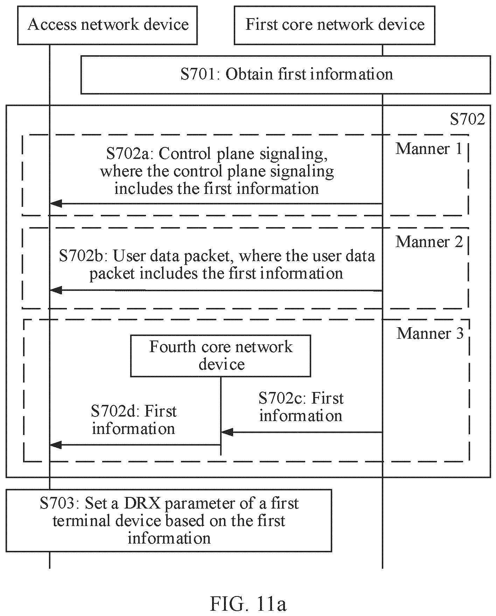

In some embodiments, as shown in FIG. 11a, S702 is described as follows.

As shown in a block in which "Manner 1" in FIG. 11a is located, if the first core network device is the session management network element, for example, an SMF network element, S702 includes S702a.

S702a: The first core network device sends the control plane signaling to the access network device. Correspondingly, the access network device receives the control plane signaling from the first core network device.

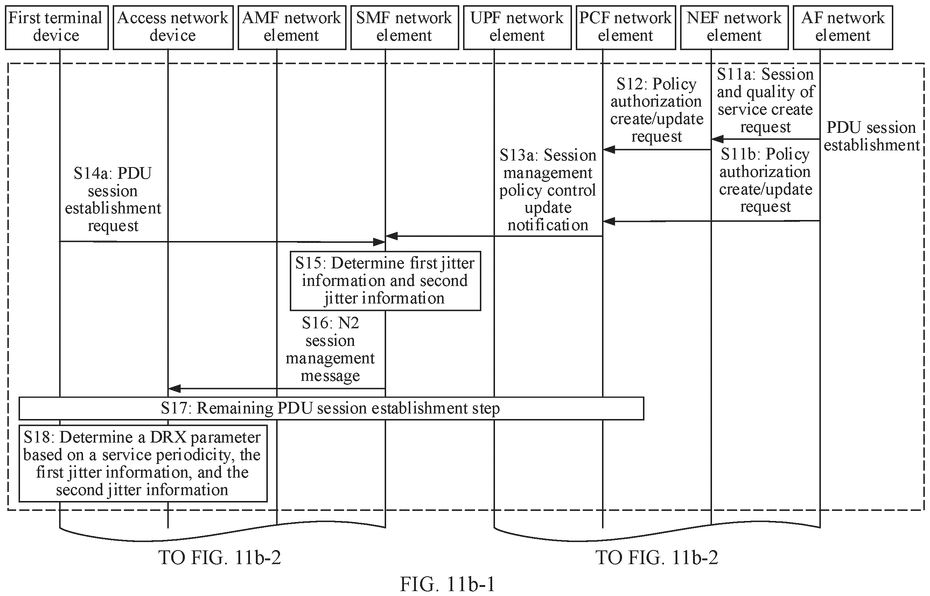

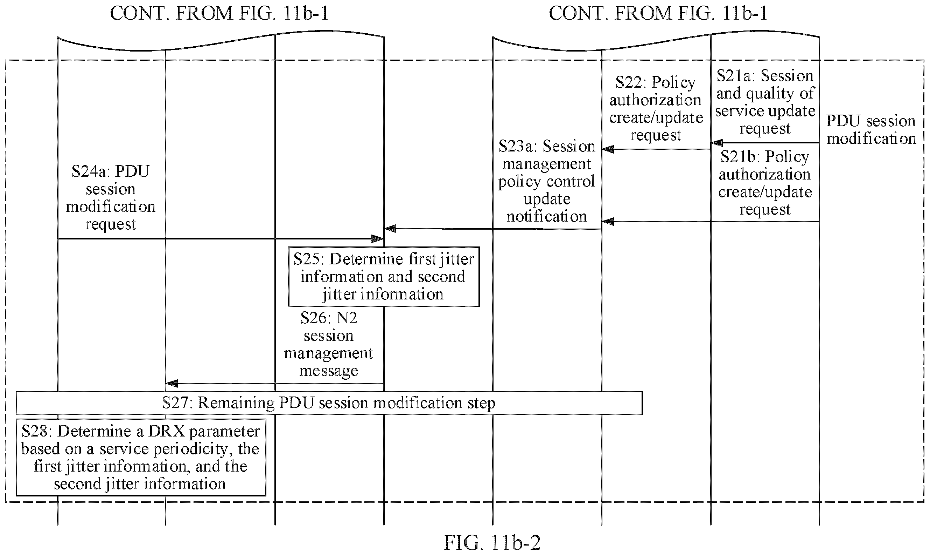

The control plane signaling includes the first information. For example, the control plane signaling is signaling in the following process: a process of establishing a PDU session for transmitting the first service, as shown in FIG. 11b-1, a process of establishing a QoS flow (flow) for transmitting the first service, or a process of modifying a PDU session for the first service, as shown in FIG. 11b-2. For example, the control plane signaling in S702a is an N2 session management message. For details, refer to descriptions in S16 in FIG. 11b-1. Details are not described herein. FIG. 11c is used as another example, and S702a may include step 3a in FIG. 11c. FIG. 11d is used as another example, and S702a may include step 3 in FIG. 11d.

Refer to FIG. 11b-1. The PDU session establishment process includes the following steps.

S11a: An AF network element sends a session and quality of service create request to an NEF network element. Correspondingly, the NEF network element receives the session and quality of service create request from the AF network element.

The session and quality of service create request may be denoted as Nnef_AF_sessionWith QoS create request. For example, Nnef_AF_sessionWith QoS create request includes the jitter range of the application layer, for example, the large jitter range and the small jitter range.

S12: The NEF network element sends a policy authorization create/update request to a PCF network element. Correspondingly, the PCF network element receives the policy authorization create/update request from the NEF network element.

The policy authorization create/update request may be denoted as Npcf_Policy Authorization Create update request. For example, Npcf_Policy Authorization Create update request includes the jitter range of the application layer, for example, the large jitter range and the small jitter range.

S11b: The AF network element sends a policy authorization create/update request to the PCF network element. Correspondingly, the PCF network element receives the policy authorization create/update request from the AF network element.

For the policy authorization create/update request in S11b, refer to the descriptions in S12. Details are not described herein again.

S13a: The PCF network element sends a session management policy authorization control update notification to the SMF network element. Correspondingly, the SMF network element receives the session management policy authorization control update notification from the PCF network element.

The session management policy authorization control update notification may be denoted as Npcf_SMPolicyControl_Update Notify. For example, Npcf_SMPolicyControl_Update Notify includes the jitter range of the application layer, for example, the large jitter range and the small jitter range.

S14a: The first terminal device sends a PDU session establishment request to the SMF network element. Correspondingly, the SMF network element receives the PDU session establishment request from the first terminal device.

The PDU session establishment request may be denoted as PDU session establishment.

A PDU session that the first terminal device requests to establish is for transmitting the service data of the first service.

S15: The SMF network element determines the first jitter information and the second jitter information.

For an implementation process of S15, refer to the descriptions in S701. Details are not described herein again.

S16: The SMF network element sends an N2 session management message to the access network device. Correspondingly, the access network device receives the N2 session management message from the SMF network element.

The N2 session management message may be denoted as N2 SM message. N2 SM message is included in N2 message. N2 message further includes a message sent by the SMF network element to the first terminal device via the access network device, for example, a PDU session establishment (PDU session establishment) accept message. A format of N2 message is as follows: N2 message (N1 SM container (PDU session establishment accept), N2 SM container (large jitter range, small jitter range)). N2 SM container and N2 SM message are equivalent concepts.

S17: The first terminal device, the access network device, the AMF network element, the SMF network element, the UPF network element, and the PCF network element jointly perform a remaining PDU session establishment step.

For the remaining PDU session establishment step in S17, refer to a related 3GPP technical specification. Details are not described herein again.

S18: The first terminal device and the access network device determine the DRX parameter based on a service periodicity, the first jitter information, and the second jitter information.

For an implementation process of S18, refer to the descriptions in S703. Details are not described herein again.

Refer to FIG. 11b-2. The PDU session modification process includes the following steps.

S21a: An AF network element sends a session and quality of service update request to an NEF network element. Correspondingly, the NEF network element receives the session and quality of service update request from the AF network element.

The session and quality of service update request may be denoted as Nnef_AF_sessionWith QoS update request. For example, Nnef_AF_sessionWith QoS update request includes the jitter range of the application layer, for example, the large jitter range and the small jitter range.

S22: The NEF network element sends a policy authorization create/update request to a PCF network element. Correspondingly, the PCF network element receives the policy authorization create/update request from the NEF network element.

For the policy authorization create/update request in S22, refer to the descriptions in S12. Details are not described herein again.

S21b: The AF network element sends a policy authorization create/update request to the PCF network element. Correspondingly, the PCF network element receives the policy authorization create/update request from the AF network element.

For the policy authorization create/update request in S21b, refer to the descriptions in S22. Details are not described herein again.

S23a: The PCF network element sends a session management policy authorization control update notification to the SMF network element. Correspondingly, the SMF network element receives the session management policy authorization control update notification from the PCF network element.

For the session management policy authorization control update notification in S23a, refer to the descriptions in S13a. Details are not described herein again.

S24a: The first terminal device sends a PDU session modification request to the SMF network element. Correspondingly, the SMF network element receives the PDU session modification request from the first terminal device.

The PDU session modification request may be denoted as PDU session modification.

The first terminal device requests, by using the PDU session modification request, to establish a QoS flow, to transmit the service data of the first service.

S25: The SMF network element determines the first jitter information and the second jitter information.

For an implementation process of S25, refer to the descriptions in S701. Details are not described herein again.

S26: The SMF network element sends an N2 session management message to the access network device. Correspondingly, the access network device receives the N2 session management message from the SMF network element.

For the N2 session management message in S26, refer to the descriptions in S16. Details are not described herein again.

S27: The first terminal device, the access network device, the AMF network element, the SMF network element, the UPF network element, and the PCF network element jointly perform a remaining PDU session modification step.

For the remaining PDU session modification step in S27, refer to a related 3GPP technical specification. Details are not described herein again.

S28: The first terminal device and the access network device determine the DRX parameter based on a service periodicity, the first jitter information, and the second jitter information.

For an implementation process of S28, refer to the descriptions in S703. Details are not described herein again.

It should be understood that, for the AF network element, if the AF network element cannot directly communicate with the PCF network element, for example, the AF network element is a third-party application server rather than an application server of an operator, the AF network element is an untrusted server for the operator. In this case, the AF network element performs S11a (or S21a). For the operator, if the AF network element is a trusted server, the AF network element can directly communicate with the PCF network element. In this case, the AF network element performs S11b (or S21b).

In other words, the first core network device provides the first information for the access network device by using the control plane signaling.

As shown in a block in which "Manner 2" in FIG. 11a is located, if the first core network device is the user plane network element, for example, an UPF network element, S702 includes S702b.

S702b: The first core network device sends a user data packet to the access network device. Correspondingly, the access network device receives the user data packet from the first core network device.

The user data packet includes the first information. For example, the user data packet includes a general packet radio service tunneling protocol user plane (general packet radio service tunneling protocol user plane, GTP-U) header, and the GTP-U header includes the first information.

FIG. 11c is used as another example, and S702b may include step 4 in FIG. 11c. FIG. 11d is used as another example, and S702b may include step 2b in FIG. 11d.

In other words, the first core network device provides the first information for the access network device by using the user plane data.

As shown in a block in which "Manner 3" in FIG. 11a is located, S702 includes S702c and S702d.

S702c: The first core network device sends the first information to a fourth core network device. Correspondingly, the fourth core network device receives the first information from the first core network device.

The first core network device and the fourth core network device are described as follows.

Case 1: The first core network device is the session management network element, for example, an SMF network element. The fourth core network device is a user plane network element, for example, a UPF network element. FIG. 11c is used as another example, and S702c may include step 3b in FIG. 11c. In this case, the first information is carried in the control plane signaling.

Case 2: The first core network device is the user plane network element, for example, a UPF network element. The fourth core network device is a session management network element, for example, an SMF network element. FIG. 11d is used as another example, and S702c may include step 2a in FIG. 11d. In this case, the first information is carried in the control plane signaling.

S702d: The fourth core network device sends the first information to the access network device. Correspondingly, the access network device receives the first information from the fourth core network device.

The fourth core network device in S702d is the same as the fourth core network device in S702c. Details are not described herein again.

Case 1: The fourth core network device is a user plane network element, for example, a UPF network element. FIG. 11c is used as another example, and S702c may include step 4 in FIG. 11c. In this case, the first information is carried in the user plane data.

Case 2: The fourth core network device is a session management network element, for example, an SMF network element. FIG. 11d is used as another example, and S702c may include step 3 in FIG. 11d. In this case, the first information is carried in the control plane signaling.

In other words, the first core network device provides the first information for the access network device via another core network device.

In this embodiment of this application, the three manners in FIG. 11a are applicable to the four cases (Example 1 to Example 4 in S701) corresponding to the first information. Details are as follows.

When the first information corresponds to Example 1 (that is, the first information includes the first jitter information but does not include the second jitter information), that the first core network device performs S702 may be understood as that the first core device provides the first terminal device with a jitter range of one partial time period (namely, the first jitter information, or described as the small jitter range). Further, before performing S702, the first core network device may send the second jitter information to the access network device. In other words, the first core network device first provides the large jitter range (namely, the second jitter information) for the access network device, and then provides the small jitter range (namely, the first jitter information) for the access network device.

When the first information corresponds to Example 2 (that is, the first information includes the first jitter information and the second jitter information), S702 is further described in two manners.

In a possible implementation, each time the first core network device performs S702, the first core network device provides the first terminal device with a jitter range of one partial time period (namely, the first jitter information, or described as the small jitter range) and a jitter range of one entire time period (the second jitter information, or described as the large jitter range). In other words, each time the first core network device sends the first information to the access network device in the duration of the first service, the first information includes the first jitter information and the second jitter information.

In another possible implementation, when the first core network device performs S702 for the first time, the first information includes the first jitter information and the second jitter information. In other words, when the first core network device sends the first information to the access network device for the first time in the duration of the first service, the first information includes the first jitter information and the second jitter information. In this case, for the first core network device, in the duration of the first service, when the first core network device sends the first information to the access network device several times after performing S702 for the first time, the first information includes the first jitter information and the second jitter information. For example, in the duration of the first service, when the first core network device sends the first information to the access network device for a second time, a fourth time, or a seventh time, the first information includes the first jitter information and the second jitter information.

When the first information corresponds to Example 3 (that is, the first information includes the first jitter information and the third jitter information, but does not include the second jitter information), that the first core network device performs S702 may be understood as that the first core network device provides the first terminal device with jitter ranges of at least two partial time periods (namely, the first jitter information and the third jitter information) at a time.

When the first information corresponds to Example 4 (that is, the first information includes the first jitter information, the second jitter information, and the third jitter information), that the first core network device performs S702 may be understood as that the first core network device provides the first terminal device with jitter ranges of at least two partial time periods (namely, the first jitter information and the third jitter information) and a jitter range of one entire time period (the second jitter information) at a time.

It should be understood that, when the first information corresponds to Example 1 and Example 2, the first core network device can further update the jitter range of the partial time period (namely, the small jitter range) in real time. As shown in FIG. 12, the communication method 700 in this embodiment of this application further includes S704, S705, and S706.

S704: The first core network device obtains the third jitter information.

For the third jitter information, refer to the descriptions in S701. Details are not described herein again.

For example, for the first core network device, after performing S701, the first core network device performs S704. Correspondingly, a partial time period corresponding to the first jitter information is denoted as a first partial time period. A partial time period corresponding to the third jitter information is denoted as a second partial time period. The end moment of the first partial time period overlaps the start moment of the second partial time period.

For example, as shown in FIG. 13, S704 is described as follows.

As shown in a block in which "Manner 1" in FIG. 13 is located, S704 includes S704a.

S704a: The first core network device determines the third jitter information based on data arrival information in a first moving time window.

The first moving time window is before the second partial time period, and is close to the second partial time period. The first moving time window has a first length. For example, the length of the first moving time window is M service periodicities. M is a positive integer. The service periodicity is a service periodicity of the first service. FIG. 14 is used as an example. The length of the first moving time window is equal to a sum of lengths of four service periodicities. At a moment t1, the first moving time window includes a service periodicity 1 to a service periodicity 3. At a moment t2, the first moving time window includes a service periodicity 5 to a service periodicity 8. It should be understood that the first moving time window may alternatively have another name, for example, a sliding window or an observation window. In this embodiment of this application, the first moving time window is used as an example for description.

The data arrival information indicates a moment at which the service data of the first service arrives at the second core network device. FIG. 14 is used as an example. At the moment t1, the data arrival information includes a moment at which the service data of the first service arrives at a session management network element (for example, a UPF network element) in each of the service periodicity 1 to the service periodicity 3. At the moment t2, the data arrival information includes a moment at which the service data of the first service arrives at the session management network element (for example, the UPF network element) in each of the service periodicity 5 to the service periodicity 8.

For example, at the moment t1, the first core network device observes data arrival information in the service periodicity 1 to the service periodicity 3, to obtain a jitter range estimation result in a partial time period. If the jitter range estimation result corresponding to the moment t1 is greater than a threshold, the first core network device uses the result as the third jitter information. On the contrary, if the jitter range estimation result corresponding to the moment t1 is less than the threshold, the first core network device continues to perform observation, and moves the first moving time window rightward. For example, at the moment t2, the first core network device observes data arrival information in the service periodicity 5 to the service periodicity 8, to obtain a jitter range estimation result in a partial time period; and then compares the jitter range estimation result corresponding to the moment with the threshold, to determine whether to use the jitter range estimation result as the third jitter information. This process is repeated, until the first core network device obtains a jitter range estimation result greater than the threshold, and uses the jitter range estimation result as the third jitter range.

As shown in a block in which "Manner 2" in FIG. 13 is located, S704 includes S704b.

S704b: The first core network device determines the third jitter information based on the data arrival information in the first moving time window and the first jitter information.

For the first moving time window and the data arrival information, refer to the descriptions in S704a. Details are not described herein again.

For example, the first core network device determines a jitter range of the second partial time period, namely, the third jitter information, based on the jitter range estimation result in the first moving time window and the first jitter range of the first partial time period.

In this way, the first core network device may update the small jitter, that is, the jitter range of the partial time period in real time.

S705: The first core network device sends the third jitter information to the access network device. Correspondingly, the access network device receives the third jitter information from the first core network device.

The third jitter information in S705 is consistent with the third jitter information in S704. Details are not described herein again.

For an implementation process of S705, refer to the descriptions in S702. Details are not described herein again.

For example, the third jitter information is transmitted by using control plane signaling in the following process: the process of modifying the PDU session for the first service.

S706: The access network device sets the DRX parameter of the first terminal device based on the third jitter information, to perform a power saving operation on the first terminal device in the second partial time period.

The third jitter information in S706 is consistent with the third jitter information in S705. Details are not described herein again.

For an implementation process of S706, refer to the descriptions of the third jitter information in S703. Details are not described herein again.

In some embodiments, the first information in S701 further includes time information. The time information indicates time at which the service data of the first service arrives at the second core network device. The time information in the first information is described as follows.

Case 1: The time information includes one piece of information. For example, the time information in the first information includes time information 1. In this case, the access network device determines at least one of the following based on the time information 1: a first item and a second item.

The first item is a time position at which the first terminal device starts to monitor the PDCCH. For example, the access network device determines, based on a time point indicated by the time information 1, a time domain range corresponding to the first jitter range. Specifically, the time point indicated by the time information 1 is used as a center point of the first jitter range. Correspondingly, a minimum value point corresponding to the first jitter range is the time position at which the first terminal device starts to monitor the PDCCH.

The second item is the start position of the on duration in the DRX cycle. For example, the access network device determines, based on the time point indicated by the time information 1, a time domain range corresponding to the second jitter range. Specifically, the time point indicated by the time information 1 is used as a center point of the second jitter range. Correspondingly, a minimum value point corresponding to the second jitter range is the start position of the on duration in the DRX cycle.

Case 2: The time information includes two pieces of information. For example, the time information in the first information includes time information 2 and time information 3. In this case, the time information 2 is used by the access network device to determine the time domain position at which the first terminal device starts to monitor the PDCCH in the partial time period, and the time information 3 is used by the access network device to determine a position of the on duration. For a specific process, refer to the descriptions of the time information 1. Details are not described herein again.

The following describes the time information in the first information with reference to FIG. 15.

When the time information is not referenced, FIG. 15 is used as an example. In (a) in FIG. 15, the start position of the on duration in the DRX cycle is determined based on a DRX cycle length and a DRX start offset value. For example, the DRX start offset value is determined based on one or more of the following parameters: drx-LongCycleStartOffset and drx-SlotOffset. The DRX cycle length is determined based on one or more of the following parameters: drx-LongCycleStartOffset and shortDRX. In (a) in FIG. 15, the DRX cycle length is 16 ms. A length of the on duration in the DRX cycle is set based on the second jitter range. For example, in a DRX cycle 1, the center point corresponding to the first jitter range is 0 ms, a time position corresponding to the first jitter range is [-2, 2] ms, and the time position at which the first terminal device starts to monitor the PDCCH is -2 ms. In a DRX cycle 2, the center point corresponding to the first jitter range is 16 ms, the time position corresponding to the first jitter range is [14, 18] ms, and the time position at which the first terminal device starts to monitor the PDCCH is 14 ms. In the DRX cycle 1, the center point corresponding to the second jitter range is 0 ms, and the on duration in the DRX cycle is [-4, 4] ms. In the DRX cycle 2, the center point corresponding to the second jitter range is 16 ms, and the on duration in the DRX cycle is [12, 20] ms.

When the time information 1 is referenced, FIG. 15 is used as an example. In (b) in FIG. 15, in each DRX cycle, the center point of the first jitter range overlaps the center point of the second jitter range. The time information 1 indicates a time point X, and the time point X may be an absolute position, for example, the 2^{nd} ms, the 18^{th} ms, or the 34^{th} ms. The time point X may alternatively be a relative position, for example, an offset relative to a start position of the DRX cycle. For example, the offset is 2 ms. A unit of the time point X may be one of the following: a symbol, a slot, a mini-slot, a subframe, a frame, ms, and the like. For definitions of the symbol, the mini-slot, the slot, the subframe, and the frame in this embodiment of this application, refer to related technical specifications of the 3rd generation partnership project (3rd generation partnership project, 3GPP).

In a DRX cycle 1, the center point corresponding to the first jitter range is 2 ms, a time position corresponding to the first jitter range is [0, 4] ms, and the time position at which the first terminal device starts to monitor the PDCCH is 0 ms. In a DRX cycle 2, the center point corresponding to the first jitter range is 18 ms, the time position corresponding to the first jitter range is [16, 20] ms, and the time position at which the first terminal device starts to monitor the PDCCH is 16 ms. In the DRX cycle 1, the center point corresponding to the second jitter range is 0 ms, and the on duration in the DRX cycle is [-2, 6] ms. In the DRX cycle 2, the center point corresponding to the second jitter range is 16 ms, and the on duration in the DRX cycle is [12, 20] ms.

When the time information 2 and the time information 3 are referenced, FIG. 15 is used as an example. In (c) in FIG. 15, in each DRX cycle, the center point of the first jitter range and the center point of the second jitter range may overlap, or may not overlap. The time information 2 indicates a time point Y, and the time information 3 indicates a time point Z.

In a DRX cycle 1, the center point corresponding to the first jitter range is 4.5 ms, a time position corresponding to the first jitter range is [2.5, 6.5] ms, and the time position at which the first terminal device starts to monitor the PDCCH is 2.5 ms. In a DRX cycle 2, the center point corresponding to the first jitter range is 20.5 ms, the time position corresponding to the first jitter range is [18.5, 22.5] ms, and the time position at which the first terminal device starts to monitor the PDCCH is 18.5 ms. In the DRX cycle 1, the center point corresponding to the second jitter range is 3 ms, and the on duration in the DRX cycle is [-1, 7] ms. In the DRX cycle 2, the center point corresponding to the second jitter range is 19 ms, and the on duration in the DRX cycle is [15, 23] ms.

In this way, when the first information further includes the time information, the start position of the DRX cycle can better match arrival information of an XR service, to avoid a problem of high power consumption caused because the first terminal device starts to monitor the PDCCH too early and a problem of missed detection caused because the first terminal device starts to monitor the PDCCH too late.

The following describes an execution process of a third core network device from a perspective of the third core network device.

As shown in FIG. 16, a communication method according to an embodiment of this application further includes the following steps.

S1601: A first core network device sends a subscription message to a third core network device. Correspondingly, the third core network device receives the subscription message from the first core network device.

The subscription message includes an analytics ID, and the analytics ID is for requesting to analyze a jitter range of a first service. For example, the analytics ID is for requesting to analyze a jitter range of the first service in a partial time period (which may be understood as that the analytics ID is for requesting to analyze a small jitter range), and/or the analytics ID is for requesting to analyze a jitter range of the first service in duration (which may be understood as that the analytics ID is for requesting to analyze a large jitter range).

(b) in FIG. 17 is used as an example. The first core network device is an SMF network element, and the third core network device is an NWDAF network element. The SMF network element sends the subscription message to the NWDAF network element.

For an implementation process of S1601, refer to the descriptions in S701d. Details are not described herein again.

S1602: The third core network device obtains first data and/or second data based on the subscription message.
(a) in FIG. 17 is used as an example. The first data may be jitter information on an AF network element side, for example, a jitter value, an application (application, APP) identifier, an identifier of a first terminal device, and an IP 5-tuple identifier.

The second data may include at least one of the following: jitter information measured by a UPF network element and jitter information measured by an access network device. The jitter information measured by the UPF network element may be understood as a superposition of AF jitter and fixed network jitter. The AF jitter is the first data. The fixed network jitter is jitter generated from an application server to the UPF network element in a 3GPP network. The jitter information measured by the UPF network element includes a jitter value measured by the UPF network element, GTP tunnel information, and the IP 5-tuple identifier.

The jitter information measured by the access network device may be understood as jitter measured by the UPF network element and jitter generated from the UPF network element to the access network device. The jitter information measured by the access network device includes a jitter value measured by the access network device and the GTP tunnel information.

For the first data and the second data, refer to the descriptions in S701b. Details are not described herein again.

S1603: The third core network device determines a jitter range learning result of the first service based on the obtained information.

For example, the jitter range learning result of the first service includes a jitter range estimation result of the first service.

For example, when the analytics ID is for requesting to analyze the jitter range of the first service, the jitter range estimation result of the first service includes at least one of a first jitter range and a second jitter range.

For another example, when the analytics ID is for requesting to analyze the jitter range of the partial time period, the jitter range estimation result of the first service includes a first jitter range.

For still another example, when the analytics ID is for requesting to analyze a jitter range of the entire duration, the jitter range estimation result of the first service includes a second jitter range.

S1604: The third core network device sends the jitter range learning result of the first service to the first core network device.

(b) in FIG. 17 is used as an example. The first core network device is the SMF network element, and the third core network device is the NWDAF network element. The NWDAF network element sends a notification message to the SMF network element. The notification message includes the jitter range learning result of the first service.

It should be understood that, for the first core network device, after performing S1604, the first core network device may provide jitter information of the first service for the access network device, so that the access network device sets a DRX parameter of the first terminal device based on the jitter range of the first service. For details, refer to the descriptions in S702 and S703. Details are not described herein again.

In some embodiments, the third core network device alternatively determines the jitter range learning result of the first service based on cell information and/or information about a QoS flow. For the cell information and the information about the QoS flow, refer to the descriptions in S701b. Details are not described herein again. (a) in FIG. 17 is used as an example. The cell information may be information provided by an OAM network element for the third core network device, for example, a cell identifier, frequency information, signal strength, and signal quality. The information about the QoS flow may be information provided by the SMF network element for the third core network device, for example, a QoS flow identifier, a QoS parameter, and an identifier of the first terminal device.

In some embodiments, the analytics ID is for requesting to analyze time at which service data of the first service arrives at a second core network device. For example, Analytics ID=data arrival information, application may be understood as that the analytics ID is for requesting to analyze data arrival information of an application, namely, time at which service data of a service arrives at the second core network device. The application is for providing a continuous service of the first service for the first terminal device. Correspondingly, the jitter range learning result of the first service further includes time information. The time information indicates estimated time at which the service data of the first service arrives at the second core network device. For details, refer to the descriptions of the time information in the first information. Details are not described herein again.

The foregoing mainly describes the solutions provided in embodiments of this application from a perspective of interaction between network elements. Correspondingly, an embodiment of this application further provides a communication apparatus. The communication apparatus may be the network element in the foregoing method embodiment, an apparatus including the foregoing network element, or a component that can be used in a network element. It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on a particular application and a design constraint of the technical solutions. A person skilled in the art may use different methods to implement the described functions for each specific application. However, it should not be considered that this implementation goes beyond the scope of this application.

For example, FIG. 18 is a diagram of a structure of a communication apparatus 1800. The communication apparatus 1800 includes a processor 1801, a communication interface 1802, and a memory 1803. Optionally, the communication apparatus may further include a bus 1804. The communication interface 1802, the processor 1801, and the memory 1803 may be connected to each other through the bus 1804. The bus 1804 may be a peripheral component interconnect (peripheral component interconnect, PCI) bus, an extended industry standard architecture (extended industry standard architecture, EISA) bus, or the like. The bus 1804 may be classified into an address bus, a data bus, a control bus, and the like. For ease of representation, only one thick line is used for representing the bus in FIG. 18, but this does not mean that there is only one bus or only one type of bus.

The processor 1801 may be a CPU, a general-purpose processor, an application-specific integrated circuit (application-specific integrated circuit, ASIC), a field programmable gate array (field programmable gate array, FPGA) or another programmable logic device, a transistor logic device, a hardware component, or any combination thereof. The processing module may implement or execute various example logical blocks, modules, and circuits described with reference to the content disclosed in this application. Alternatively, the processor may be a combination of processors implementing a computing function, for example, a combination of one or more microprocessors, or a combination of the DSP and a microprocessor.

For example, the communication apparatus 1800 in FIG. 18 may be the access network device in the communication method 700 in embodiments of this application. The processor 1801 is configured to support the access network device in performing a processing operation, for example, S703. The communication interface 1802 is configured to support the access network device in performing a receiving and sending operation, for example, S702.

Alternatively, the communication apparatus 1800 in FIG. 18 may be the first core network device in the communication method 700 in embodiments of this application. The processor 1801 is configured to support the first core network device in performing a processing operation, for example, S701. The communication interface 1802 is configured to support the first core network device in performing a receiving and sending operation, for example, S702.

Alternatively, the communication apparatus 1800 in FIG. 18 may be the third core network device in the communication method 700 in embodiments of this application. The processor 1801 is configured to support the third core network device in performing a processing operation, for example, S1602 or S1603. The communication interface 1802 is configured to support the third core network device in performing a receiving and sending operation, for example, S1601 or S1604.

Optionally, an embodiment of this application further provides a computer program product carrying computer instructions. When the computer instructions are run on a computer, the computer is enabled to perform the method described in the foregoing embodiment.

Optionally, an embodiment of this application further provides a computer-readable storage medium. The computer-readable storage medium stores computer instructions. When the computer instructions are run on a computer, the computer is enabled to perform the method described in the foregoing embodiment.

Optionally, an embodiment of this application further provides a chip, including a processing circuit and a transceiver circuit. The processing circuit and the transceiver circuit are configured to implement the method described in the foregoing embodiments. The processing circuit is configured to perform a processing action in a corresponding method, and the transceiver circuit is configured to perform a receiving/sending action in the corresponding method.

All or a part of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, all or a part of procedures or functions according to embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, a computer, a server, or a data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid state drive (solid state drive, SSD)), or the like.

In several embodiments provided in this application, it should be understood that the disclosed systems, apparatuses, and methods may be implemented in other manners. For example, the apparatus embodiment described above is merely an example. For example, the module division is merely logical function division and may be other division during actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electronic or other forms.

The units described as separate parts may or may not be physically separate, and parts displayed as units may or may not be physical units, in other words, may be located in one position, or may be distributed on a plurality of devices. A part or all of the units may be selected based on an actual requirement to achieve objectives of the solutions of embodiments.

Based on the foregoing descriptions of the implementations, a person skilled in the art may clearly understand that this application may be implemented by software in addition to necessary universal hardware or by hardware only. In most circumstances, the former is a better implementation. Based on such an understanding, the technical solutions of this application essentially or the part making contribution may be implemented in a form of a software product. The computer software product is stored in a readable storage medium, such as a floppy disk, a hard disk, or an optical disc of a computer, and includes several instructions for instructing a computer device (which may be a personal computer, a server, or a network device) to perform the methods described in embodiments of this application.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A communication method, comprising:
obtaining, by a first core network device, first information, wherein the first information comprises first jitter information, the first jitter information indicates a first jitter range, the first jitter range is related to a first partial time period, the first partial time period is in duration of a first service, and the first service is related to a first terminal device; and
sending, by the first core network device, the first information to an access network device, wherein the first information is associated with a setting of a discontinuous reception DRX parameter.

2. The method according to claim 1, wherein
when the first core network device sends the first information to the access network device in the duration, the first information further comprises second jitter information, wherein
the second jitter information indicates a second jitter range, and the second jitter range is a jitter range of the entire duration of the first service.

3. The method according to claim 1, wherein before the sending, by the first core network device, the first information to an access network device, the method further comprises:
sending, by the first core network device, second jitter information to the access network device, wherein
the second jitter information indicates a second jitter range, and the second jitter range is a jitter range of the entire duration of the first service.

4. The method according to claim 2 or 3, wherein
the first jitter range is less than the second jitter range.

5. The method according to any one of claims 1 to 4, wherein
the obtaining, by a first core network device, first information comprises:
receiving, by the first core network device, the first information from an application server; or
determining, by the first core network device, the first information based on at least one of the following:
first data, wherein the first data comprises a deviation of a moment at which an application server generates service data of the first service; or
second data, wherein the second data comprises jitter that is of service data of the first service and that is generated in the following process:
a transmission process from an application server to a second core network device, and/or a transmission process from the second core network device to the access network device.

6. The method according to any one of claims 1 to 4, wherein
the obtaining, by a first core network device, first information comprises:
receiving, by the first core network device, the first information from a third core network device.

7. The method according to claim 6, wherein
the first information is determined by the third core network device based on at least one of the following:
first data, wherein the first data comprises a deviation of a moment at which an application server generates service data of the first service; or
second data, wherein the second data comprises jitter that is of service data of the first service and that is generated in the following process:
a transmission process from an application server to a second core network device, and/or a transmission process from the second core network device to the access network device.

8. The method according to claim 6 or 7, wherein before the receiving, by the first core network device, the first information from a third core network device, the method further comprises:
sending, by the first core network device, a subscription message to the third core network device, wherein
the subscription message comprises an analytics identifier ID, and the analytics ID is for requesting to analyze jitter information of the first service.

9. The method according to any one of claims 1 to 8, wherein after the sending, by the first core network device, the first information to an access network device, the method further comprises:
obtaining, by the first core network device, third jitter information, wherein the third jitter information indicates a third jitter range, the third jitter range is related to a second partial time period, and the second partial time period is in the duration of the first service; and
sending, by the first core network device, the third jitter information to the access network device, wherein the third jitter information is associated with the setting of the DRX parameter.

10. The method according to claim 9, wherein
the obtaining, by the first core network device, third jitter information comprises:
determining, by the first core network device, the third jitter information based on data arrival information in a first moving time window; or
determining, by the first core network device, the third jitter information based on data arrival information in a first moving time window and the first jitter information;
wherein the first moving time window is before the second partial time period, and
the data arrival information indicates a moment at which the service data of the first service arrives at the second core network device.

11. The method according to claim 10, wherein
the first moving time window has a first length.

12. The method according to any one of claims 1 to 8, wherein
the first information further comprises third jitter information, wherein
the third jitter information indicates a third jitter range, the third jitter range is related to a second partial time period, and the second partial time period is in the duration of the first service.

13. A communication method, comprising:
receiving, by an access network device, first information from a first core network device, wherein the first information comprises first jitter information, the first jitter information indicates a first jitter range, the first jitter range is related to a first partial time period, the first partial time period is in duration of a first service, and the first service is related to a first terminal device; and
configuring, by the access network device, a discontinuous reception DRX parameter for the first terminal device in the first partial time period based on the first information.

14. The method according to claim 13, wherein
when the access network device receives the first information from the first core network device in the duration, the first information further comprises second jitter information, wherein
the second jitter information indicates a second jitter range, and the second jitter range is a jitter range of the entire duration of the first service.

15. The method according to claim 13, wherein before the receiving, by an access network device, first information from a first core network device, the method further comprises:
receiving, by the access network device, second jitter information from the first core network device, wherein
the second jitter information indicates a second jitter range, and the second jitter range is a jitter range of the entire duration of the first service.

16. The method according to claim 14 or 15, wherein
the first jitter range is less than the second jitter range.

17. The method according to any one of claims 13 to 16, wherein after the receiving, by an access network device, first information from a first core network device, the method further comprises:
receiving, by the access network device, third jitter information from the first core network device, wherein the third jitter information indicates a third jitter range, the third jitter range is related to a second partial time period, and the second partial time period is in the duration of the first service; and
configuring, by the access network device, the DRX parameter for the first terminal device in the second partial time period based on the third jitter information.

18. The method according to any one of claims 13 to 16, wherein
the first information further comprises third jitter information, wherein
the third jitter information indicates a third jitter range, the third jitter range is related to a second partial time period, and the second partial time period is in the duration of the first service.

19. The method according to any one of claims 14 to 16, wherein
the configuring, by the access network device, a DRX parameter for the first terminal device in the first partial time period based on the first information comprises:
determining, by the access network device based on the first jitter information, a time domain position at which the first terminal device starts to monitor a PDCCH in the first partial time period.

20. The method according to claim 19, wherein
the second jitter information is used by the access network device to configure a length of on duration in a DRX cycle, wherein
the time domain position of the PDCCH is in the on duration in the DRX cycle, and the DRX cycle is in the first partial time period.

21. A first core network device, comprising a processor and a memory, wherein the processor is coupled to the memory, the memory stores program instructions, and when the program instructions stored in the memory are executed by the processor, the method according to any one of claims 1 to 12 is implemented.

22. An access network device, comprising a processor and a memory, wherein the processor is coupled to the memory, the memory stores program instructions, and when the program instructions stored in the memory are executed by the processor, the method according to any one of claims 13 to 20 is implemented.

23. A chip, comprising a processor and an input/output interface, wherein the input/output interface is configured to receive a signal from an apparatus other than the chip and transmit the signal to the processor, or send a signal from the processor to an apparatus other than the chip, and the processor is configured to implement the method according to any one of claims 1 to 20 by using a logic circuit or executing code instructions.

24. A computer-readable storage medium, wherein the storage medium stores a computer program or instructions, and when the computer program or the instructions are executed, the method according to any one of claims 1 to 20 is implemented.

25. A communication system, comprising a first core network device and an access network device, wherein
the first core network device is configured to obtain first information, wherein the first information comprises first jitter information, the first jitter information indicates a first jitter range, the first jitter range is related to a first partial time period, the first partial time period is in duration of a first service, and the first service is related to a first terminal device;
the first core network device is configured to send the first information to the access network device, wherein the first information is associated with a setting of a discontinuous reception DRX parameter;
the access network device is configured to receive the first information from the first core network device, wherein the first information comprises the first jitter information, the first jitter information indicates the first jitter range, the first jitter range is related to the first partial time period, the first partial time period is in the duration of the first service, and the first service is related to the first terminal device; and
the access network device is further configured to configure the discontinuous reception DRX parameter for the first terminal device in the first partial time period based on the first information.

26. The system according to claim 25, further comprising a third core network device, wherein
the third core network device is configured to receive a subscription message from the first core network device, wherein the subscription message comprises an analytics identifier ID, and the analytics ID is for requesting to analyze a jitter range of the first service;
the third core network device is further configured to obtain at least one of the following information based on the subscription message:
first data, wherein the first data comprises a deviation of a moment at which an application server generates service data of the first service; or
second data, wherein the second data comprises jitter that is of service data of the first service and that is generated in the following process:
a transmission process from an application server to a second core network device, and/or a transmission process from the second core network device to the access network device;
the third core network device is further configured to determine a jitter range learning result of the first service based on the obtained information; and
the third core network device is further configured to send the jitter range learning result of the first service to the first core network device.
